# EUROPÄISCHE PATENTANMELDUNG

(11) **EP 4 752 407 A1**
(43) Veröffentlichungstag der Anmeldung: **03.06.2026**
(21) Anmeldenummer: 24216884.7
(22) Anmeldetag: 02.12.2024
(51) Int. Cl.: F16K 1/36, F16K 1/42, F16K 1/52, F16K 31/124, F16K 31/145, F16K 31/365, F16K 31/56, F16K 31/60, F16K 27/02, F16K 31/385

(54) **ABSPERRORGAN MIT EINER LAGEREINRICHTUNG**

(71) Anmelder: Neoperl GmbH, 79379 Müllheim (DE)
(72) Erfinder: Seoung-Eun Kim, 79189 Bad Krozingen (DE); Tempel, Marc, 79111 Freiburg (DE); Bian, Yichao, 79379 Müllheim (DE)
(74) Vertreter: Mertzlufft-Paufler, Cornelius

(57) **Zusammenfassung**

Die Erfindung betrifft ein Absperrorgan (1), insbesondere Ventil, für ein fließfähiges Medium mit mindestens einem in eine geöffnete Stellung und in eine geschlossene Stellung bringbaren Verschlusselement (3, 20), und einem Sitz (4, 21) für das mindestens eine Verschlusselement (3, 20), insbesondere einem Ventilsitz. Bei dem Absperrorgan (1) ist eine Zwischenstellung des Verschlusselements (3, 20) durch eine Lagereinrichtung (32) bestimmt, insbesondere wobei in der Zwischenstellung das Verschlusselement (3, 20) die Lagereinrichtung (32) kontaktiert und/oder von dem Sitz (4, 21) beabstandet ist.

## Beschreibung

Die Erfindung betrifft ein Absperrorgan für ein fließfähiges Medium mit mindestens einem in eine geöffnete Stellung und in eine geschlossene Stellung bringbaren Verschlusselement und einem Sitz für das mindestens eine Verschlusselement.

Die Erfindung betrifft des Weiteren eine Absperrorganbetätigungsvorrichtung mit einem hier beschriebenen Absperrorgan und insbesondere eine Ventilbetätigungsvorrichtung mit einem hier beschriebenen Ventil.

Das Absperrorgan kann insbesondere als ein Ventil ausgebildet sein, wobei der Sitz als ein Ventilsitz ausgebildet ist.

Absperrorgane sind grundsätzlich aus der Praxis bekannt, beispielsweise in Gestalt von Ventilen, Schiebern, Klappen oder Hähnen.

Ein Absperrorgan dient dazu, eine Strömung eines fließfähigen Mediums, insbesondere eine Strömung eines Fluids, durch eine an dem Sitz des Absperrorgans angrenzende Öffnung freizugeben, zu stoppen und/oder zu drosseln. Zu diesem Zweck kann ein Absperrorgan in unterschiedliche Zustände gebracht werden.

In einem geöffneten Zustand eines Absperrorgans, insbesondere eines Ventils, in welchem ein maximaler Durchfluss eines fließfähigen Mediums durch die an dem Sitz des Absperrorgans angrenzende Öffnung möglich ist, ist das Verschlusselement in der geöffneten Stellung angeordnet. In der geöffneten Stellung ist das Verschlusselement derart beabstandet zu dem Sitz angeordnet, dass ein fließfähiges Medium unbeeinflusst oder im Wesentlichen unbeeinflusst von dem Verschlusselement durch die an dem Sitz des Absperrorgans angrenzende Öffnung hindurchströmen kann.

In einem geschlossenen Zustand eines Absperrorgans, insbesondere eines Ventils, in welchem kein Durchfluss oder im Wesentlichen kein Durchfluss eines fließfähigen Mediums durch die an dem Sitz des Absperrorgans angrenzende Öffnung möglich ist, ist das Verschlusselement in der geschlossenen Stellung angeordnet. In der geschlossenen Stellung ist das Verschlusselement derart dichtend an dem Sitz angeordnet, dass ein fließfähiges Medium nicht oder im Wesentlichen nicht durch die an dem Sitz des Absperrorgans angrenzende Öffnung hindurchströmen kann.

Es hat sich gezeigt, dass in einem Zustand von Absperrorganen, in welchem das Verschlusselement in einer Zwischenstellung zwischen der geöffneten Stellung und der geschlossenen Stellung angeordnet ist, in welcher ein gedrosselter Durchfluss eines fließfähigen Mediums durch die an dem Sitz des Absperrorgans angrenzende Öffnung möglich ist, Geräusche von dem Absperrorgan emittiert werden. Diese Geräusche können als störend empfunden werden. Es kann daher wünschenswert sein, diese Geräusche zu vermeiden.

Der Erfindung liegt die Aufgabe zugrunde, ein Absperrorgan bereitzustellen, welches in einer Zwischenstellung eines Verschlusselements keine Geräusche oder vermindert Geräusche emittiert.

Diese Aufgabe wird durch die Gegenstände mit den Merkmalen der unabhängigen Ansprüche gelöst. Vorteilhafte Ausgestaltungen gehen aus den abhängigen Ansprüchen hervor.

Die in den abhängigen Patentansprüchen einzeln aufgeführten Merkmale können in beliebiger technologisch sinnvollerweise miteinander kombiniert werden und weitere Ausgestaltungen der Erfindung definieren, solange diese Kombinationen die Merkmale wenigstens eines unabhängigen Anspruchs aufweisen. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zur Lösung der gestellten Aufgabe schlägt die Erfindung den Gegenstand mit den Merkmalen von Anspruch 1 vor. Insbesondere wird somit erfindungsgemäß bei einem Absperrorgan der eingangs beschriebenen Art zur Lösung der genannten Aufgabe vorgeschlagen, dass eine Zwischenstellung des Verschlusselements durch eine Lagereinrichtung bestimmt ist.

Das Verschlusselement kann also, wie vorstehend beschrieben, in eine Zwischenstellung zwischen der geöffneten Stellung und der geschlossenen Stellung bewegbar sein, wobei die Zwischenstellung durch eine funktionale und/oder räumliche Beziehung zu der Lagereinrichtung definiert ist. Die Lagereinrichtung ist eine Einrichtung, welche ein Lager ausbildet und/oder aufweist.

Insbesondere kann das Verschlusselement die Lagereinrichtung in der Zwischenstellung kontaktieren. Mit anderen Worten ausgedrückt, kann die Lagereinrichtung als ein Lager für das in der Zwischenstellung befindliche Verschlusselement dienen.

Zusätzlich oder alternativ kann das Verschlusselement in der Zwischenstellung von dem Sitz beabstandet sein. Insbesondere lagert das Verschlusselement in der Zwischenstellung an oder auf der Lagereinrichtung und weist dabei keinen Kontakt zu dem Sitz auf. Bevorzugt beträgt der Abstand von dem Verschlusselement in der Zwischenstellung zu dem Sitz 0,05mm bis 0,2 mm.

Dadurch, dass das Verschlusselement in der Zwischenstellung insbesondere einen Abstand zu dem Sitz aufweist, kann ein fließfähiges Medium durch die an dem Sitz des Absperrorgans angrenzende Öffnung hindurchströmen. Ein vordefinierter Abstand des in der Zwischenposition befindlichen Verschlusselements zu dem Sitz erlaubt eine im Vergleich zur geöffneten Stellung des Verschlusselements reduzierte Durchströmung. Aufgrund des bevorzugt zwischen dem Verschlusselement und der Lagereinrichtung bestehenden physischen Kontakts ist das Verschlusselement sicher gelagert und/oder derart angeordnet, dass es sich begrenzt bewegen und insbesondere schwingen kann. Dadurch ist eine Emission von Geräuschen stark reduziert oder sogar eliminiert.

In der Praxis kann das Absperrorgan eine Stellmechanik und/oder eine Verstelleinrichtung aufweisen, mit welcher/welchen das Verschlusselement oder ein Bestandteil des Verschlusselements in einen einstellbaren Abstand zu dem Sitz bringbar ist/sind.

Die Stellmechanik kann insbesondere dazu dienen, das Verschlusselement zwischen seiner geöffneten Stellung und seiner geschlossenen Stellung zu verlagern.

Die Verstelleinrichtung kann insbesondere dazu dienen, das Verschlusselement in einen variabel einstellbaren Abstand zu dem Sitz zu bewegen. Dadurch ist es auch möglich, das Verschlusselement mittels der Verstelleinrichtung in die Zwischenstellung zu bewegen. Mittels der Verstelleinrichtung kann durch die Einstellung des Abstandes des Verschlusselements oder eines Bestandteils des Verschlusselements zu dem Sitz eine Durchflussrate des fließfähigen Mediums durch die an dem Sitz angrenzende Öffnung eingestellt werden. Die Verstelleinrichtung kann somit als Drossel dienen.

Die Verstelleinrichtung kann insbesondere als eine Drehmechanik ausgebildet sein. Eine Drehmechanik weist ein von einem Bediener betätigbares, drehbares Betätigungsmittel, insbesondere ein Handbedienelement, auf, welches mittels einer mechanischen Anordnung mit dem Verschlusselement und/oder mit dem Sitz verbunden ist. Durch ein Drehen des Betätigungsmittels werden das Verschlusselement und der Sitz relativ aufeinander zu bewegt.

In der Praxis können zumindest ein mit der Lagereinrichtung in Kontakt bringbarer Bestandteil des Verschlusselements und die Lagereinrichtung mit unterschiedlicher Elastizität ausgebildet sein.

Die Elastizität ist eine Werkstoffeigenschaft, welche die elastische Verformbarkeit beschreibt. Wenn zumindest ein mit der Lagereinrichtung in Kontakt bringbarer Bestandteil des Verschlusselements oder das gesamte Verschlusselement und die Lagereinrichtung eine unterschiedliche Elastizität aufweisen, ist einer dieser Bestandteile leichter verformbar als der andere Bestandteil. Dadurch ist insbesondere bei einem Kontakt des Verschlusselements mit der Lagereinrichtung das Verschlusselement, ein Bestandteil des Verschlusselements, und/oder die Lagereinrichtung elastisch verformbar. Aufgrund der elastischen Verformbarkeit mindestens eines der beiden miteinander in Kontakt befindlichen, vorgenannten Elemente kann eine besonders sichere Lagerung des Verschlusselements an oder auf der Lagereinrichtung erzielt werden.

In einer bevorzugten Ausführungsform kann insbesondere das Verschlusselement aus einem Werkstoff gebildet sein, der eine höhere Elastizität, d.h. einen geringeren Elastizitätsmodul, aufweist als der Werkstoff, aus welchem der Sitz gebildet ist.

Wie vorstehend beschrieben, ist es auch möglich, dass lediglich ein Bestandteil des Verschlusselements aus einem Werkstoff gebildet ist, welcher eine höhere Elastizität aufweist, als der Werkstoff, aus welchem der Sitz gebildet ist.

Wenn der Sitz einen höheren Elastizitätsmodul aufweist und somit schwieriger elastisch verformbar ausgebildet ist als das Verschlusselement oder als ein Bestandteil des Verschlusselements, welcher in der Zwischenposition mit der Lagereinrichtung in Kontakt befindlich ist, kann es weiter bevorzugt sein, dass die Lagereinrichtung schwieriger verformbar ausgebildet ist als das Verschlusselement oder als der Bestandteil des Verschlusselements, welcher mit der Lagereinrichtung in Kontakt befindlich ist.

Alternativ zu der vorstehend beschriebenen bevorzugten Ausführungsform kann bei einer weiteren bevorzugten Ausführungsform die Lagereinrichtung aus einem Werkstoff gebildet sein, welcher eine höhere Elastizität aufweist als der Werkstoff, aus welchem das Verschlusselement gebildet ist. In diesem Fall kann insbesondere auch der Sitz aus einem Werkstoff gebildet sein, welcher eine höhere Elastizität aufweist als der Werkstoff, aus welchem das Verschlusselement gebildet ist.

Wenn eines der vorgenannten Elemente aus einem Werkstoff mit geringerer Elastizität gebildet ist, kann dieses Element beispielsweise aus einem Metall, insbesondere Stahl, gebildet sein. Wenn eines der vorgenannten Elemente aus einem Werkstoff mit höherer Elastizität gebildet ist, kann dieses Element beispielsweise aus einem Kunststoff, insbesondere einem Elastomer, gebildet sein.

Weiter zusätzlich oder alternativ können der zumindest mit der Lagereinrichtung in Kontakt bringbare Bestandteil des Verschlusselements und die Lagereinrichtung mit unterschiedlicher Steifigkeit ausgebildet sein.

Die Steifigkeit beschreibt eine Verformbarkeit der vorgenannten Elemente unter Berücksichtigung der Elastizität und der geometrischen Ausgestaltung. Die geometrische Ausgestaltung fließt insbesondere mit dem Flächenträgheitsmoment in die Steifigkeit und somit in die Verformbarkeit ein. Es ist somit auch möglich, dass ein Bauteil, welches aus einem Werkstoff mit geringem Elastizitätsmodul gebildet ist und welches ein hohes Flächenträgheitsmoment aufweist, bei höheren Kräften schwieriger verformbar ist als ein Bauteil, welches aus einem Werkstoff mit hohem Elastizitätsmodul gebildet ist und welches ein niedriges Flächenträgheitsmoment aufweist.

In der Praxis ist es möglich, dass die Lagereinrichtung und das Verschlusselement im Kontakt miteinander mindestens zwei voneinander beabstandete Kontaktpunkte ausbilden.

Aufgrund der zwei oder mehr zwischen der Lagereinrichtung und dem Verschlusselement in der Zwischenstellung ausgebildeten, voneinander beabstandeten Kontaktpunkte kann ein mechanischer Druck, der bei dem Kontakt entsteht, gut verteilt werden und/oder das Verschlusselement kann besonders sicher an oder auf der Lagereinrichtung gelagert werden.

Des Weiteren ist es, aufgrund des Abstandes zwischen den Kontaktpunkten möglich, dass das fließfähige Medium durch einen Strömungsquerschnitt strömt, welcher beispielsweise von dem Verschlusselement, dem Sitz und der Lagereinrichtung mit den beabstandeten Kontaktpunkten umrahmt wird.

Weiter ist es in der Praxis möglich, dass das Verschlusselement zumindest abschnittsweise als eine Membran ausgebildet ist oder eine Membran aufweist.

Mit anderen Worten ausgedrückt, kann das Verschlusselement als eine Membran ausgebildet sein, oder einen als Membran ausgebildeten Abschnitt aufweisen. Die Membran kann Bestandteil eines einstückig ausgebildeten Verschlusselements sein. Alternativ ist es auch möglich, dass das Verschlusselement mehrteilig ausgebildet ist, wobei es einen Hauptkörper aufweist und eine an dem Hauptkörper angeordnete Membran.

Insbesondere kann die Membran die Lagereinrichtung in der Zwischenstellung kontaktieren.

Eine Membran ist ein dünnes, schwingungsfähiges Bauteil. Insbesondere kann die Membran aus einem Werkstoff gebildet sein, der eine hohe Elastizität aufweist, und/oder ein insbesondere bei Biegebeanspruchung niedriges Flächenträgheitsmoment aufweisen. Weiter insbesondere kann der Werkstoff, aus dem die Membran gebildet ist, einen niedrigeren Elastizitätsmodul aufweisen als ein Werkstoff, aus dem die Lagereinrichtung gebildet ist. Die Membran kann beispielsweise aus einem Kunststoff, insbesondere einem Elastomer, gebildet sein.

Das Verschlusselement kann derart ausgebildet und angeordnet sein, dass das Verschlusselement mit der Membran an einer Wandung des Absperrorgans befestigt ist, so dass das Verschlusselement in einem Bewegungsbereich der schwingungsfähigen Membran beweglich mit der Wandlung verbunden ist.

Wenn die Membran an einem Hauptkörper des Verschlusselements angeordnet ist, kann die Membran insbesondere aus einem Werkstoff gebildet sein, der einen niedrigeren Elastizitätsmodul aufweist als der Werkstoff, aus dem der Hauptkörper gebildet ist.

Zusätzlich oder alternativ können, wenn die Membran an einem Hauptkörper des Verschlusselements angeordnet ist, die Membran und der Hauptkörper zueinander zumindest abschnittsweise beweglich sein. Beispielsweise kann die Membran lokal mit dem Hauptkörper verbunden sein, wobei die nicht mit dem Hauptkörper verbundenen Bestandteile der Membran in Relation zu dem Hauptkörper beweglich sind. Die Membran kann beispielsweise mit einem Randabschnitt in einer an dem Hauptkörper ausgebildeten Aufnahme für die Membran eingeklemmt sein. Zusätzlich oder alternativ kann die Membran mit einem an dem Randabschnitt angrenzenden Abschnitt insbesondere flächig an einem parallel zu diesem Abschnitt ausgebildeten Abschnitt des Hauptkörpers des Verschlusselements anliegen, wobei dieser Abschnitt der Membran und dieser Abschnitt des Hauptkörpers nicht miteinander verbunden sind. Dieser Abschnitt der Membran ist daher beweglich und insbesondere schwingungsfähig.

Die Membran kann weiter zusätzlich oder wieder alternativ an einem äußeren Rand des Verschlussteils ausgebildet sein oder daran befestigt sein. Dieser äußere Rand kann den Hauptkörper beispielsweise umfangsseitig umgeben. Der Hauptkörper kann insbesondere transversal zu einer Ebene, in welcher die Membran angeordnet ist, beweglich sein, weil die Membran transversal zu dieser Ebene schwingungsfähig ist.

In der Praxis kann eine oder die Membran des Verschlusselements in der Zwischenstellung zwischen der Lagereinrichtung und einem oder dem Hauptkörper des Verschlusselements abgestützt angeordnet sein.

Insbesondere kann die Membran in der Zwischenstellung zwischen der Lagereinrichtung und dem Hauptkörper des Verschlusselements eingeklemmt sein. Bevorzugt weist der Hauptkörper einen oder den zuvor beschriebenen Abschnitt auf, an welchem ein und insbesondere der beschriebene Abschnitt der Membran lose anliegt, wobei insbesondere dieser Abschnitt eine geringere Verformbarkeit, d.h. eine geringere Elastizität und/oder ein höheres Flächenträgheitsmoment, aufweist als der Abschnitt der Membran, der an diesem Abschnitt des Hauptkörpers anliegt. Dieser Bestandteil des Hauptkörpers kann insbesondere im Wesentlichen tellerförmig ausgebildet sein.

Insbesondere kann auch, wie beschrieben, die Lagereinrichtung eine geringere Elastizität und/oder eine höhere Steifigkeit aufweisen als die Membran. Dadurch ist ein sicheres Abstützen, insbesondere Einklemmen, der Membran möglich.

Zusätzlich oder alternativ kann die Membran zumindest teilweise an einem Abschnitt des Hauptkörpers, der insbesondere aus einem Werkstoff mit geringerer Elastizität gebildet ist als der Werkstoff, aus dem die Membran gebildet ist, anliegen. Dieser Abschnitt des Hauptkörpers kann beispielsweise eine insbesondere rückwärtige Stütze für die Membran gegenüber dem Sitz sein und/oder beispielsweise die Membran in der Zwischenstellung des Verschlusselements an diesem Abschnitt abgestützt sein. Zusätzlich oder alternativ kann dieser Abschnitt eine höhere Steifigkeit aufweisen als die Membran und/oder härter sein als die Membran.

Die Lagereinrichtung kann in der Praxis einstückig mit dem Sitz ausgebildet sein.

Durch die einstückige Ausbildung der Lagereinrichtung mit dem Sitz ist die Lagereinrichtung in Bezug auf den Sitz positionsfest ausgebildet. Insbesondere können der Sitz und die Lagereinrichtung Abschnitte oder Bestandteile eines gemeinsamen Bauteils des Absperrorgans, beispielsweise eines Gehäuseteils des Absperrorgans, sein. Durch die einstückige Ausbildung kann das Absperrorgan in vorteilhafterweise aus wenigen Bauteilen bestehen. Dies ist vorteilhaft, weil dadurch der Zusammenbau des Absperrorgans vereinfacht ist und das Absperrorgan eine geringe Anzahl etwaig schwachen Fügestellen aufweist.

Alternativ kann die Lagereinrichtung in der Praxis aber auch an einem oder dem den Sitz aufweisenden Bauteil befestigt sein. Auch hierdurch ist die Lagereinrichtung in Bezug auf den Sitz positionsfest angeordnet. Zusätzlich kann dadurch die Herstellung der Lagereinrichtung und/oder des den Sitz aufweisenden Bauteils vereinfacht sein.

In der Praxis kann die Lagereinrichtung als ein Auflager mit mindestens einer transversal zu einer Bewegungsrichtung des Verschlusselements ausgerichteten Kontaktfläche ausgebildet sein.

Beispielsweise kann die Lagereinrichtung als eine stufenförmige Struktur oder eine Mehrzahl von stufenförmigen Strukturen ausgebildet sein.

Aufgrund der mindestens einen transversal zu der Bewegungsrichtung des Verschlusselements ausgerichteten Kontaktfläche der Lagereinrichtung kann das Verschlusselement durch die Bewegung in der Bewegungsrichtung zwischen der geöffneten Stellung und der geschlossenen Stellung besonders einfach in die Zwischenstellung gebracht und dort einfach und sicher auf der mindestens einen Kontaktfläche gelagert werden. Wenn das Verschlusselement zusätzlich den hier beschriebenen insbesondere tellerförmigen Abschnitt sowie den hier beschriebenen lose daran anliegenden Abschnitt der Membran aufweist, kann der Abschnitt der Membran insbesondere zwischen der transversal zu der Bewegungsrichtung des Verschlusselements ausgerichteten Kontaktfläche und dem insbesondere tellerförmigen Abschnitt des Hauptelements des Verschlusselements in der Zwischenposition eingeklemmt sein.

Zusätzlich oder alternativ kann die Lagereinrichtung als ein Auflager mit mindestens einer parallel zu einer Bewegungsrichtung des Verschlusselements ausgerichteten Kontaktfläche ausgebildet sein. Insbesondere wenn in der Zwischenstellung mindestens zwei voneinander beabstandete Kontaktpunkte zwischen der Lagereinrichtung und dem Verschlusselement ausgebildet sind, ist es möglich, dass das Verschlusselement und insbesondere die Membran bei einer Bewegung des Verschlusselements in der Bewegungsrichtung zwischen die parallel zu der Bewegungsrichtung und beabstandet ausgebildeten Kontaktflächen gebracht und somit eingeklemmt wird.

In der Praxis kann in der Zwischenstellung des Verschlusselements ein erster Strömungsquerschnitt von der Lagereinrichtung mitbestimmt sein und ein zweiter Strömungsquerschnitt von dem Verschlusselement und dem Sitz bestimmt sein, wobei der erste Strömungsquerschnitt größer ist als der zweite Strömungsquerschnitt.

Der zweite Strömungsquerschnitt kann insbesondere stromabwärts einer bestimmungsgemäßen Strömung eines fließfähigen Mediums angeordnet sein.

Der erste Strömungsquerschnitt kann insbesondere von der Lagereinrichtung, oder zumindest von Bestandteilen der Lagereinrichtung, sowie von einem oder mehreren an der Lagereinrichtung angrenzenden Bestandteil des Verschlusselements und von dem Sitz oder einem an dem Sitz angrenzenden Bestandteil des den Sitz aufweisenden Bauteils gebildet sein.

Insbesondere, wenn die Lagereinrichtung als eine stufenförmige Struktur oder eine Mehrzahl von stufenförmigen Strukturen ausgebildet ist, kann die stufenförmige Struktur oder Mehrzahl von stufenförmigen Strukturen derart ausgebildet sein, dass wenn sich das Verschlusselement in der Zwischenstellung befindet, ein fließfähiges Medium durch einen oder den hier beschriebenen Strömungsquerschnitt, der zwischen mindestens zwei Bereichen der stufenförmigen Struktur oder zwischen mindestens zwei stufenförmigen Strukturen gebildet ist, hindurchströmen kann. Dabei kann das Verschlusselement insbesondere an oder auf der stufenförmigen Struktur oder den stufenförmigen Strukturen anliegen oder aufliegen, insbesondere so dass ein geschlossener Strömungsquerschnitt für das fließfähige Medium gebildet ist. Die Summe der Strömungsquerschnitte zwischen jeweils zwei Bereichen der stufenförmigen Struktur oder zwischen jeweils zwei stufenförmigen Strukturen kann insbesondere mindestens genauso groß und bevorzugt größer sein wie ein Strömungsquerschnitt, der in der Zwischenstellung zwischen dem Verschlusselement und dem Sitz gebildet ist. Dadurch wird die Durchflussrate in der Zwischenstellung des Verschlusselements auch bei Vorhandensein der mindestens einen stufenförmigen Struktur durch den zweiten Strömungsquerschnitt zwischen dem Verschlusselement und dem Sitz bestimmt.

In der Praxis kann weiter vorgesehen sein, dass die Lagereinrichtung einen Vorsprung oder eine Mehrzahl von Vorsprüngen aufweist.

Der Vorsprung oder die Mehrzahl von Vorsprüngen können insbesondere derart ausgebildet sein, dass wenn sich das Verschlusselement in der Zwischenstellung befindet, ein fließfähiges Medium durch einen oder den hier beschriebenen Strömungsquerschnitt, der zwischen dem Verschlusselement und mindestens zwei Bereichen des Vorsprungs oder mindestens zwei Vorsprüngen gebildet ist, hindurchströmen kann. Dabei kann das Verschlusselement insbesondere an oder auf dem Vorsprung oder den Vorsprüngen anliegen oder aufliegen, insbesondere so dass ein geschlossener Strömungsquerschnitt für das fließfähige Medium gebildet ist. Die Summe der Strömungsquerschnitte zwischen jeweils zwei Bereichen des Vorsprungs oder zwischen jeweils zwei Vorsprüngen kann insbesondere mindestens genauso groß und bevorzugt größer sein wie ein Strömungsquerschnitt, der in der Zwischenstellung zwischen dem Verschlusselement und dem Sitz gebildet ist. Dadurch wird die Durchflussrate in der Zwischenstellung des Verschlusselements auch bei Vorhandensein des mindestens einen Vorsprungs durch den zweiten Strömungsquerschnitt zwischen dem Verschlusselement und dem Sitz bestimmt.

Der Vorsprung oder die Mehrzahl von Vorsprüngen kann zusätzlich oder alternativ insbesondere von einem oder dem den Sitz aufweisenden Bauteil in die Richtung des Verschlusselements hervorragen.

Der Vorsprung oder die Mehrzahl von Vorsprüngen kann beispielsweise in einer Richtung, welche parallel zu der Bewegungsrichtung des Verschlusselements orientiert ist, von einem oder dem den Sitz aufweisenden Bauteil in die Richtung des Verschlusselements hervorragen. Zusätzlich oder alternativ kann ein oder der Vorsprung oder eine oder die Mehrzahl von Vorsprüngen in einer Richtung von dem den Sitz aufweisenden Bauteil hervorragen, die diagonal und insbesondere orthogonal zu der Richtung, in welcher sich das Verschlusselement bewegen kann, orientiert ist.

Der Vorsprung oder die Vorsprünge der Mehrzahl von Vorsprüngen können beispielsweise als eine Pin-förmige Struktur oder als eine Mehrzahl von Pin-förmigen Strukturen ausgebildet sein. Alternativ kann der Vorsprung oder die Mehrzahl von Vorsprüngen derartige Strukturen zumindest aufweisen.

Wenn die Lagereinrichtung als eine stufenförmige Struktur oder eine Mehrzahl von stufenförmigen Strukturen ausgebildet ist, können die Vorsprünge beispielsweise von der mindestens einen stufenförmigen Struktur hervorragen, oder in der Zwischenstellung des Verschlusselements daran anliegen. In diesen Fällen können insbesondere die mindestens eine stufenförmige Struktur und der mindestens eine Vorsprung derart ausgebildet sein, dass wenn sich das Verschlusselement in der Zwischenstellung befindet, ein fließfähiges Medium durch einen oder den hier beschriebenen Strömungsquerschnitt, der zwischen dem Verschlusselement, mindestens zwei stufenförmigen Strukturen und mindestens zwei Vorsprüngen gebildet ist, hindurchströmen kann. Dabei kann das Verschlusselement insbesondere an oder auf der mindestens einen stufenförmigen Struktur und/oder dem mindestens einen Vorsprung anliegen oder aufliegen, insbesondere so dass ein geschlossener Strömungsquerschnitt für das fließfähige Medium gebildet ist. Die Summe der Strömungsquerschnitte zwischen jeweils zwei stufenförmigen Strukturen und jeweils zwei Vorsprüngen kann insbesondere mindestens genauso groß und bevorzugt größer sein wie ein Strömungsquerschnitt, der in der Zwischenstellung zwischen dem Verschlusselement und dem Sitz gebildet ist. Dadurch wird die Durchflussrate in der Zwischenstellung des Verschlusselements auch bei Vorhandensein der mindestens einen stufenförmigen Struktur und des mindestens einen Vorsprungs durch den zweiten Strömungsquerschnitt zwischen dem Verschlusselement und dem Sitz bestimmt.

In der Praxis kann das Verschlusselement einen oder den beschriebenen Vorsprung oder eine oder die beschriebene Mehrzahl von Vorsprüngen aufweisen.

Der Vorsprung oder die Mehrzahl von Vorsprüngen kann insbesondere von dem Verschlusselement in die Richtung der Lagereinrichtung hervorragen.

Insbesondere kann eine oder die Membran des Verschlusselements einen oder den beschriebenen Vorsprung oder eine oder die beschriebene Mehrzahl von Vorsprüngen aufweisen.

Wenn das Verschlusselement den Vorsprung oder die Mehrzahl von Vorsprüngen aufweist, welcher bzw. welche insbesondere an der Membran angeordnet sind und/oder in die Richtung der Lagereinrichtung hervorragen, ist es möglich, das Verschlusselement mit der Membran mittels der Vorsprünge an der Lagereinrichtung abzustützen. Somit kann im Wesentlichen die gleiche Wirkung erzielt werden, wie mit den hier beschriebenen an der Lagereinrichtung vorgesehenen Vorsprüngen. Es wird daher auch explizit auf die Beschreibung im Zusammenhang mit den Vorsprüngen an der Lagereinrichtung verwiesen.

In der Praxis kann das Verschlusselement lösbar mit einem Steuerelement gekoppelt sein. Insbesondere kann die Kopplung eine mechanische Kopplung sein. Eine lösbare Kopplung kann geöffnet und geschlossen werden.

Insbesondere können mit dem Steuerelement die Stellungen des Verschlusselements vorgebbar sein. Das Steuerelement kann beispielsweise ein Bestandteil der Stellmechanik und/oder der Verstelleinrichtung sein, oder zumindest mit der Stellmechanik und/oder mit der Verstelleinrichtung mechanisch verbunden sein.

Die lösbare Kopplung des Verschlusselements mit dem Steuerelement kann insbesondere dergestalt sein, dass zumindest in der Zwischenstellung des Verschlusselements eine lose Kopplung vorliegt. Zusätzlich oder alternativ kann die lösbare Kopplung dergestalt sein, dass in der geöffneten Stellung und/oder in der geschlossenen Stellung des Verschlusselements eine feste Kopplung vorliegt. Eine lose Kopplung bedeutet, dass die Kopplung entweder aktiv durch eine Bedienung von einem Bediener oder passiv durch auf das Verschlusselement und/oder auf das Steuerelement wirkende Randbedingungen lösbar und schließbar ist. Eine feste Kopplung bedeutet, dass die geschlossene Kopplung insbesondere aktiv durch eine Bedienung von einem Bediener, nicht passiv durch auf das Verschlusselement und/oder auf das Steuerelement wirkende Randbedingungen, öffenbar und schließbar ist.

Die lösbare und insbesondere in der Zwischenstellung des Verschlusselements lose Kopplung kann beispielsweise mit einem Formschluss und/oder einem Kraftschluss erzielt werden.

Weiter insbesondere können das Verschlusselement und das Steuerelement bei geschlossener Kopplung mittels einer bevorzugt in der Bewegungsrichtung des Verschlusselements wirkenden Kraft unmittelbar oder mittelbar aneinander gehalten werden. Mit anderen Worten ausgedrückt, kann die Kopplung geschlossen sein oder geschlossen werden, wenn diese Kraft aufgebracht wird. Die Kopplung kann wiederum geöffnet sein oder geöffnet werden, wenn diese Kraft entfernt ist.

Wenn das Verschlusselement und das Steuerelement unmittelbar aneinander gehalten werden, weisen diese Bauteile einen direkten Kontakt zueinander auf. Wenn das Verschlusselement und das Steuerelement mittelbar aneinander gehalten werden, kann ein weiteres Bauteil zwischen dem Verschlusselement und dem Steuerelement angeordnet sein, welches bei geschlossener Kopplung wiederum einen direkten Kontakt zu dem Verschlusselement und dem Steuerelement aufweist.

Eine das Steuerelement und das Verschlusselement aneinander haltende Kraft kann beispielsweise von einer mechanischen Feder und/oder von einem mit dem Absperrorgan zu steuernden, fließfähigen Medium auf das Steuerelement und/oder das Verschlusselement aufgebracht werden. Zusätzlich oder alternativ kann diese Kraft elektromagnetisch aufgebracht werden.

Aufgrund der hier beschriebenen Kopplung zwischen dem Verschlusselement und dem Steuerelement kann mittels einer Betätigung des Steuerelements die Stellung des Verschlusselements verändert werden. Die lösbare und insbesondere in der Zwischenstellung des Verschlusselements lose Kopplung ist insbesondere bei einer bestimmten Klasse von Ventilen, beispielsweise bei Membranventilen mit Durchflusseinstellung, insbesondere wobei die Durchflusseinstellung durch eine Variation eines oder des Öffnungshubs der Membran erfolgt, vorteilhaft. Aufgrund der lösbaren und insbesondere in der Zwischenstellung des Verschlusselements losen Kopplung kann allerdings der Zusammenhalt zwischen dem Steuerelement und dem Verschlusselement vergleichsweise schwach sein, so dass sich diese zumindest in der Zwischenstellung des Verschlusselements relativ zueinander bewegen können. Wenn, wie bei der hier beschriebenen Erfindung, das Steuerelement das Verschlusselement in der Zwischenstellung gegen die Lagereinrichtung lagert, ist die Bewegung zwischen dem Steuerelement und dem Verschlusselement in der Zwischenstellung erheblich reduziert.

Das Absperrorgan kann in der Praxis eine Ausgleichvorrichtung aufweisen.

Die Ausgleichsvorrichtung kann insbesondere ein Bestandteil der Stellmechanik sein.

Die Ausgleichvorrichtung kann beispielsweise zwischen einem Bedienelement, das von einem Bediener bedient wird, um das Absperrorgan zu schalten, und einem, insbesondere dem beschriebenen, Steuerelement ausgebildet sein. Die Ausgleichsvorrichtung kann ausgebildet sein, eine Betätigung des Bedienelements an das Steuerelement zu vermitteln. Zu diesem Zweck kann die Ausgleichvorrichtung eine Aufnahme aufweisen, in der ein Ende des Steuerelements oder ein mit dem Steuerelement mechanisch verbundenes Bauteil begrenzt beweglich gehalten ist.

Die Beweglichkeit des Endes des Steuerelements oder des mit dem Steuerelement mechanisch verbundenen Bauteils in der Aufnahme kann erlauben, dass das Bedienelement über ein Ende des Verstellwegs des Steuerelements hinaus bewegbar ist.

In der Praxis kann das Absperrorgan ein Haupt-Absperrorgan und ein Pilot-Absperrorgan aufweist. Dabei kann das Haupt-Absperrorgan als ein Absperrorgan mit den vorstehend und/oder nachstehend beschriebenen Merkmalen ausgebildet sein. Zusätzlich oder alternativ kann das Pilot-Absperrorgan als ein Absperrorgan mit den vorstehend und/oder nachstehend beschriebenen Merkmalen ausgebildet sein. Insbesondere kann das Haupt-Absperrorgan als ein Hauptventil ausgebildet sein und/oder das Pilot-Absperrorgan kann als ein Pilotventil ausgebildet sein.

In der Praxis kann das Absperrorgan ein erstes Verschlusselement, einen ersten Sitz für das erste Verschlusselement, ein zweites Verschlusselement, einen zweiten Sitz für das zweite Verschlusselement und mindestens eine Lagereinrichtung aufweisen.

Insbesondere können das erste Verschlusselement und der erste Sitz ein oder das hier beschriebene Haupt-Absperrorgan, insbesondere das Hauptventil, ausbilden und/oder das zweite Verschlusselement und der zweite Sitz ein oder das hier beschriebene Pilot-Absperrorgan, insbesondere das Pilotventil, ausbilden. Zu diesem Zweck kann das erste Verschlusselement ein Hauptverschlusselement sein und der erste Sitz ein Hauptsitz, weiter bevorzugt ein Hauptventilsitz. Zusätzlich oder alternativ kann das zweite Verschlusselement ein Pilotverschlusselement sein und der zweite Sitz ein Pilotsitz, weiter bevorzugt ein Pilotventilsitz.

Das Haupt-Absperrorgan, insbesondere das Hauptventil, kann insbesondere dazu dienen, eine Strömung eines fließfähigen Mediums durch die an dem Hauptsitz, insbesondere an dem Hauptventilsitz, angrenzende Öffnung freizugeben, zu stoppen und/oder zu drosseln. Das Pilot-Absperrorgan, insbesondere das Pilotventil, kann insbesondere dazu dienen, eine Strömung eines fließfähigen Mediums durch eine an dem Pilotsitz, insbesondere an dem Pilotventilsitz, angrenzende Öffnung freizugeben, zu stoppen und/oder zu drosseln.

Mit einem und insbesondere dem hier beschrienen Pilot-Absperrorgan, insbesondere dem Pilotventil, kann es beispielsweise möglich sein, das fließfähige Medium zum Verstellen des Hauptverschlusselement in die geöffnete Stellung, in die geschlossene Stellung und/oder in die Zwischenstellung mitzuverwenden. Dadurch kann das Schalten des Absperrorgans besonders leichtgängig sein.

Das Pilotverschlusselement und der Pilotsitz, insbesondere der Pilotventilsitz, können derart ausgebildet und angeordnet sein, dass das Pilotverschlusselement in dessen geschlossener Stellung den insbesondere als Pilotventilsitz ausgebildeten Pilotsitz kontaktiert und die dran angrenzende Öffnung verschließt. In einer geöffneten Stellung des Pilotverschlusselements kann das Pilotverschlusselement einen Abstand zu dem insbesondere als Pilotventilsitz ausgebildeten Pilotsitz aufweisen und die dran angrenzende Öffnung freigeben.

Der Pilotsitz, insbesondere der Pilotventilsitz, und die daran angrenzende Öffnung können insbesondere an bzw. in dem Hauptverschlusselement angeordnet sein.

Mit dem Pilot-Absperrorgan, insbesondere dem Pilotventil, ist es möglich, eine Druckkammer zu schaffen, die mit dem fließfähigen Medium befüllbar ist. Wenn eine an dem insbesondere als Pilotventilsitz ausgebildeten Pilotsitz angrenzende Öffnung der Druckkammer mit dem Pilotverschlusselement verschlossen ist und das fließfähige Medium durch eine geöffnete Befüllöffnung in die Druckkammer einströmt, kann ein Druck in der Druckkammer erzeugt werden. Wenn die an dem insbesondere als Pilotventilsitz ausgebildeten Pilotsitz angrenzende Öffnung der Druckkammer nicht mit dem Pilotverschlusselement verschlossen ist und das fließfähige Medium durch diese Öffnung aus der Druckkammer ausströmt, kann ein Druck in der Druckkammer abgebaut werden. Im Ergebnis kann durch ein Ansteuern des Pilot-Absperrorgans, insbesondere des Pilotventils, ein Druck in der Druckkammer eingestellt werden. Dieser Druck kann zum Steuern des Hauptverschlusselements genutzt werden.

Sofern ein oder das beschriebene Steuerelement vorgesehen ist, kann/können das Haupt-Absperrorgan, insbesondere das Hauptventil, und/oder das Pilot-Absperrorgan, insbesondere das Pilotventil, mit dem Steuerelement steuerbar sein.

Mit der mindestens einen Lagereinrichtung kann insbesondere die Zwischenstellung des Hauptverschlusselements bestimmt sein, insbesondere wobei das Hauptverschlusselement in dessen Zwischenstellung die Lagereinrichtung kontaktiert und/oder von dem insbesondere als Hauptventilsitz ausgebildeten Hauptsitz beabstandet ist.

Insbesondere kann das Absperrorgan mindestens zwei Lagereinrichtungen aufweisen. Wenn das Absperrorgan das Haupt-Absperrorgan, insbesondere das Hauptventil, und das Pilot-Absperrorgan, insbesondere das Pilotventil, aufweist, kann an dem Haupt-Absperrorgan, insbesondere an dem Hauptventil, und an dem Pilot-Absperrorgan, insbesondere an dem Pilotventil, jeweils eine Lagereinrichtung vorgesehen sein. So kann eine Zwischenstellung des Hauptverschlusselements und des Pilotverschlusselements von einer dem jeweiligen Verschlusselement zugeordneten Lagereinrichtung bestimmt sein. Jede dieser mindestens zwei Lagereinrichtungen kann einige oder alle der hier beschriebenen Merkmale aufweisen.

In der Praxis kann das Verschlusselement bestimmungsgemäß entlang einer Längsachse beweglich sein.

Insbesondere kann das Verschlusselement entlang einer Längsachse eines Steuerelements beweglich sein.

Zusätzlich oder alternativ kann das Absperrorgan als ein verstellbares Drosselventil ausgebildet sein. Das verstellbare Drosselventil kann insbesondere linear verstellbar sein.

Wenn das Absperrorgan ein Haupt-Absperrorgan, insbesondere ein Hauptventil, und ein Pilot-Absperrorgan, insbesondere ein Pilotventil, aufweist, kann insbesondere das Haupt-Absperrorgan als Drosselventil ausgebildet sein.

Als Drosselventil wird ein Ventil verstanden, mit welchem eine Durchflussrate eines fließfähigen Mediums durch eine an dem Sitz des Drosselventils angrenzende Öffnung variabel einstellbar ist. Zu diesem Zweck kann ein Verschlusselement des Drosselventils insbesondere linear beweglich sein.

In der Praxis kann weiter vorgesehen sein, dass eine und insbesondere die beschriebene Stellmechanik und/oder eine und insbesondere die beschriebene Verstelleinrichtung eine Push-Push-Verriegelungsmechanik aufweist/aufweisen.

Die Push-Push-Verriegelungsmechanik kann beispielsweise eine Kugelschreibermechanik oder eine Herzkurvenmechanik sein. Insbesondere kann die Push-Push-Verriegelungsmechanik ein Bestandteil der Stellmechanik sein.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen und Verwendungen.

Es zeigt:
- Fig. 1: eine dreidimensionale Außenansicht auf ein hier beschriebenes Absperrorgan in einer Zwischenstellung,
- Fig. 2: einen Längsschnitt des Absperrorgans aus Fig. 1 in einer Ansicht auf die in Fig. 1 mit II bezeichnete Schnittebene,
- Fig. 3: eine weitere Schnittansicht des in Fig. 2 mit III bezeichneten Bereichs des Absperrorgans auf eine um die Längsachse gedrehte Schnittebene,
- Fig. 4: ein freigestelltes, eine Lagereinrichtung aufweisendes Bauteil des Absperrorgans aus Fig. 1 in einer dreidimensionalen Ansicht, in einer ersten Ausführungsform
- Fig. 5: das Bauteil aus Fig. 4 mit einem daran anliegenden Verschlusselement gemäß einer ersten Ausführungsform, in einer geschnittenen Ansicht,
- Fig. 6: das Bauteil aus Fig. 4 mit dem daran anliegenden Verschlusselement aus Fig. 5 gemäß einer ersten Ausführungsform, in einer dreidimensionalen Ansicht,
- Fig. 7: ein freigestelltes, eine Lagereinrichtung aufweisendes Bauteil des Absperrorgans aus Fig. 1 in einer dreidimensionalen Ansicht, in einer zweiten Ausführungsform,
- Fig. 8: das Bauteil aus Fig. 7 mit einem daran anliegenden Verschlusselement gemäß einer zweiten Ausführungsform, in einer geschnittenen Ansicht,
- Fig. 9: ein freigestelltes, eine Lagereinrichtung aufweisendes Bauteil des Absperrorgans aus Fig. 1 in einer dreidimensionalen Ansicht, in einer dritten Ausführungsform,
- Fig. 10: das Bauteil aus Fig. 9 mit einem daran anliegenden Verschlusselement gemäß der ersten Ausführungsform, in einer geschnittenen Ansicht,
- Fig. 11: das Bauteil aus Fig. 4 mit einem daran anliegenden Verschlusselement gemäß einer dritten Ausführungsform, in einer geschnittenen Ansicht.

Bei der nachfolgenden Beschreibung verschiedener Gegenstände und Ausführungsbeispiele der Erfindung erhalten in ihrer Funktion übereinstimmende Elemente auch bei abweichender Gestaltung oder Formgebung übereinstimmende Bezugszeichenahlen.

Zur besseren Übersicht sind in den Figuren nicht alle Bezugszeichen gesetzt, obwohl die Elemente sehr wohl in den Figuren vorhanden sein können. Gleiche Bezugszeichen bezeichnen jedoch funktionell und/oder konstruktiv gleiche Bauteile und Funktionseinheiten.

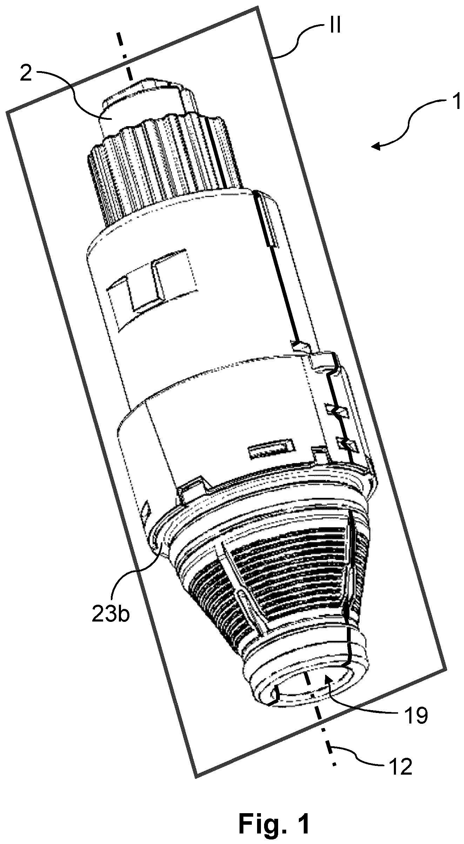

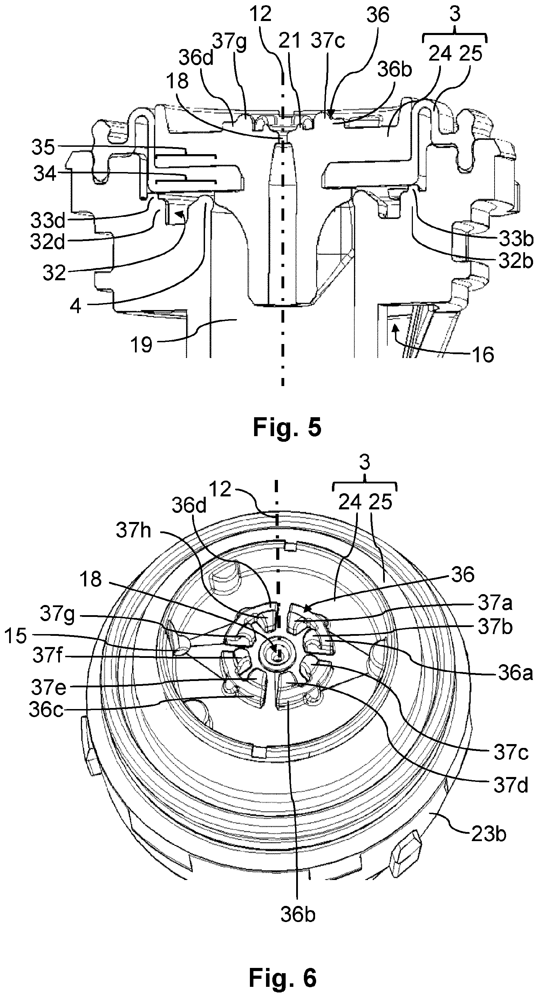

Zunächst werden hier nachfolgend, insbesondere mit Bezug auf die Fig. 1, Fig. 2 und Fig. 3 der allgemeine Aufbau und die Funktionsweise eines Ausführungsbeispiels eines erfindungsgemäßen Absperrorgans beschrieben. Anschließend werden, insbesondere in Zusammenhang mit Fig. 5 und Fig. 6, Details zu einer Lagereinrichtung und einer Zwischenstellung des Absperrorgans beschrieben. Die Fig. 1 bis Fig. 6 zeigen die gleiche Ausführungsform des hier beschriebenen Absperrorgans für ein fließfähiges Medium.

Bei dem in den Fig. 1 bis Fig. 6 gezeigten und hier beschriebenen Ausführungsbeispiel ist das Absperrorgan 1 als ein Ventil 1 ausgebildet.

Das Ventil 1 kann einen geöffneten Zustand, einen geschlossenen Zustand und mindestens einen Zwischenzustand zwischen dem geöffneten Zustand und dem geschlossenen Zustand annehmen. In dem geöffneten Zustand kann das Ventil 1 eine größtmögliche Durchflussrate eines fließfähigen Mediums zulassen. In dem geschlossenen Zustand kann das Ventil 1 einen Durchfluss eines fließfähigen Mediums unterbinden. In dem Zwischenzustand kann das Ventil 1 eine Durchflussrate eines fließfähigen Mediums, die zwischen der Durchflussrate im geöffneten Zustand und dem unterbundenen Durchfluss im geschlossenen Zustand liegt, zulassen.

Die Fig. 1 bis Fig. 3 zeigen das Ventil 1 in der Zwischenstellung.

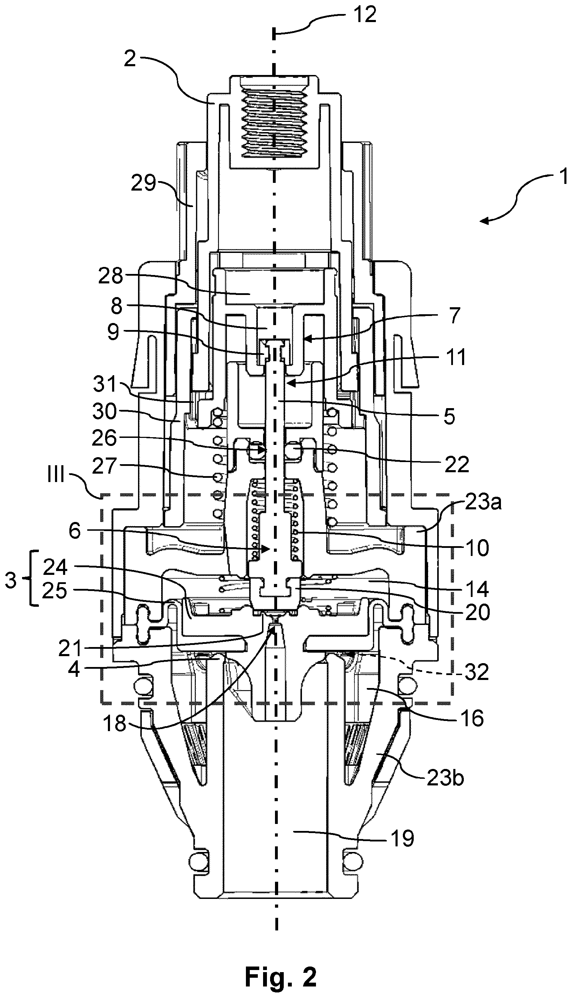

Das Schalten zwischen den Zuständen erfolgt mittels eines in Fig. 1 und Fig. 2 gezeigten Handbedienelements 2 des Ventils 1, wobei das Handbedienelement 2 dazu dient, ein als Hauptverschlusselement ausgebildetes erstes Verschlusselement 3 zu verlagern.

In einem in den Figuren nicht gezeigten Zustand des Ventils 1 liegt das Hauptverschlusselement 3 des Ventils 1 dichtend an einem als Hauptventilsitz ausgebildeten ersten Sitz 4 des Ventils 1 an. Das Hauptverschlusselement 3 und der Hauptventilsitz 4 bilden somit gemeinsam ein als ein Hauptventil ausgebildetes Haupt-Absperrorgan aus. Mit dem Schalten des Ventils 1 von dem geschlossenen Zustand in den geöffneten Zustand wird das Hauptverschlusselement 3 verlagert, so dass es einen großen, vordefinierten Abstand zu dem Sitz 4 aufweist, in welchem eine Strömung eines fließfähigen Mediums nicht oder im Wesentlichen nicht von dem Hauptverschlusselement 3 beeinflusst wird.

Zwischen dem Handbedienelement 2 und dem Hauptverschlusselement 3 ist ein insbesondere in Fig. 2 zu erkennendes Steuerelement 5 angeordnet, welches eine von einem Bediener an dem Handbedienelement 2 ausgeübte Bedienbewegung an das Hauptverschlusselement 3 vermittelt.

An einem distalen Ende 6 des Steuerelements 5, bezogen auf die Lage zu dem Handbedienelement 2, ist das Steuerelement 5 derart mit dem Hauptverschlusselement 3 gekoppelt, dass das Hauptverschlusselement 3 mit dem Steuerelement 5 zwischen der geöffneten Stellung und der geschlossenen Stellung verlagerbar ist. Insbesondere liegt das Steuerelement 5 mit dem distalen Ende 6 beweglich an dem Hauptverschlusselement 3 an.

Die Kopplung ist beispielsweise lösbar und insbesondere lose, so dass in der beweglichen Anlage eine in die Richtung des Hauptverschlusselements 3 gerichtete Bewegung des Steuerelements 5 eine Verschiebung des Hauptverschlusselements 3 bewirkt und eine in die Richtung des Steuerelements 5 gerichtete Bewegung des Hauptverschlusselements 3 eine Verschiebung des Hauptverschlusselements 3 bewirkt. Bei einer entgegen der Richtung des Hauptverschlusselements 3 gerichteten Bewegung des Steuerelements 5 und/oder bei einer entgegen der Richtung des Steuerelements 5 gerichteten Bewegung des Hauptverschlusselements 3 sind das Hauptverschlusselement 3 und das Steuerelement 5 voneinander trennbar.

Diese Kopplung kann vorteilhaft für die Funktionalität des Ventils 1 sein, wie anhand der nachfolgenden Beschreibung erläutert wird. Aufgrund dieser Kopplung können das Hauptverschlusselement 3 und das Steuerelement 5 in unterschiedlichen Situationen gemeinsam oder separat bewegt werden. Die Erfindung schlägt insbesondere Merkmale vor, mit welchen eine von der separaten Beweglichkeit des Hauptverschlusselements 3 und des Steuerelements 5 begünstige Entwicklung von Geräuschen, insbesondere aufseiten des Hauptverschlusselements 3, verminderbar sind.

Zwischen dem Handbedienelement 2 und dem Steuerelement 5 ist eine in Fig. 2 zu erkennende Ausgleichvorrichtung 7 ausgebildet, welche eine Betätigung des Handbedienelements 2 an das Steuerelement 5 vermittelt.

Hierzu weist die Ausgleichvorrichtung 7 eine Aufnahme 8 auf, in der ein Stößel 9 gleitend beweglich linear geführt ist. Diese Bewegungsfreiheit des Stößels 9 führt dazu, dass das Steuerelement 5 relativ zu dem Handbedienelement 2 beweglich ist.

Um das Steuerelement 5 in einer bevorzugten Ruhestellung relativ zu dem Handbedienelement 2 zu halten, ist in dem Ventil 1 ein Rückstellelement 10 ausgebildet. Dieses Rückstellelement 10 entwickelt eine Rückstellkraft, um das Steuerelement 5, sofern die Stellung dieses Steuerelements 5 dies zulässt, in der Ruhestellung in der Aufnahme 8 zu halten.

Das Rückstellelement 10 ist außerhalb der Ausgleichvorrichtung 7 und insbesondere außerhalb der Aufnahme 8 angeordnet. Somit ist eine Behinderung der Gleitbewegung des Stößels 9 in der Aufnahme 8 vermeidbar. Der Stößel 9, der in der Aufnahme 8 geführt ist, ist direkt mit dem auf die Lage zu dem Handbedienelement 2 bezogenen proximalen Ende 11 des Steuerelements 5 mechanisch verbunden.

Die Aufnahme 8 der Ausgleichvorrichtung 7 ist dagegen fest mit dem Handbedienelement 2 verbunden.

Durch die Längsachse 12 des Ventils 1 ist eine Stößel-Führungsrichtung vorgegeben, entlang welcher der Stößel 9 in der Aufnahme 8 verschieblich geführt ist.

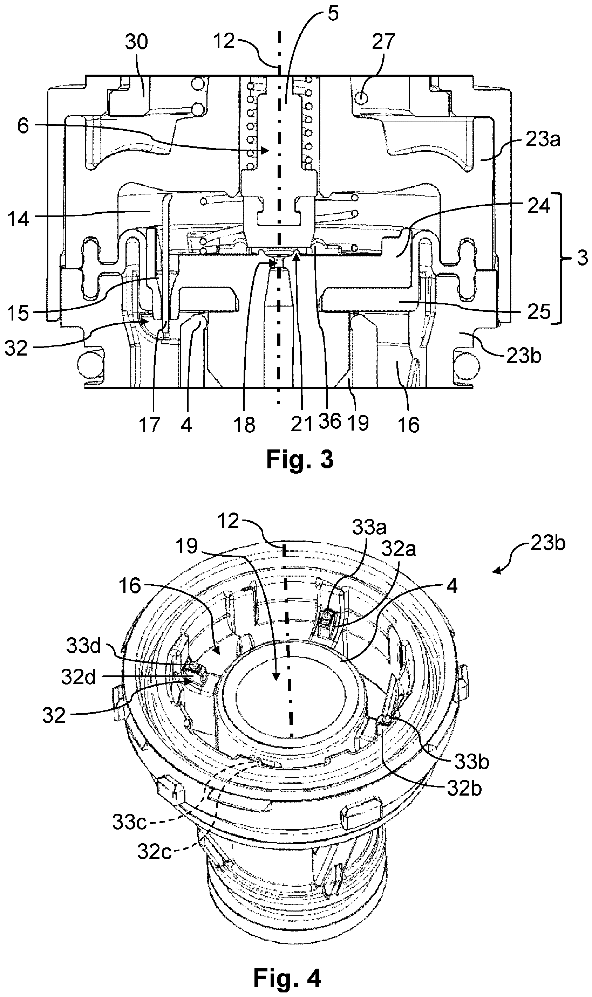

Wie insbesondere in Fig. 2 und Fig. 3 zu erkennen ist, weist das Ventil 1 eine Druckkammer 14 auf, welche durch eine Befüllöffnung 15 fluidal mit einem Zulauf 16 des Ventils 1 verbunden ist. In der Befüllöffnung 15 ist ein Reinigungsstift 17 angeordnet, der verhindert, dass sich die Befüllöffnung zusetzen kann. Durch eine Ablauföffnung 18 ist die Druckkammer 14 mit einem Ablauf 19 des Ventils fluidal verbunden.

Die Druckkammer 14 ist derart ausgebildet, dass das Steuerelement 5 zumindest mit einem Abschnitt, der das distale Ende 6 enthält, in der Druckkammer 14 angeordnet ist. Die Druckkammer 14 ist gegen das Handbedienelement 2 und gegen einen Abschnitt des Steuerelements 5, der das proximale Ende 11 enthält, durch eine Dichtung 22 abgedichtet. Die Dichtung 22 liegt hierbei an einem Bauteil 23a des Ventils 1 an, welches ein Gehäuseteil 23a eines Gehäuses des Ventils 1 darstellt.

Die Ausgleichvorrichtung 7 befindet sich in der Fig. 2 oberhalb der Dichtung 22 und folglich außerhalb der Druckkammer 14. Das Steuerelement 5 ist verschiebbar in dem Gehäuseteil 23a angeordnet. Wenn das Ventil 1 geschaltet wird, wird die Dichtung 22 mit der Ausgleichvorrichtung 7 mitbewegt. Die Dichtung 22 ist ein Dichtring, der eine Durchtrittsöffnung 26 umgibt, durch welche das Steuerelement 5 dichtend aus der Druckkammer 14 nach Außen geführt ist, so dass die Druckkammer 14 in der in Fig. 2 gezeigten Darstellung nach oben abgeschlossen ist.

Auf der der Durchtrittsöffnung 26 gegenüberliegenden Seite ist die Druckkammer 14 von dem Hauptverschlusselement 3 abgeschlossen. Das Hauptverschlusselement 3 weist einen Hauptkörper 24 und eine Membran 25 auf. Die Membran 25 ist insbesondere im Wesentlichen ringförmig ausgebildet und mit einem inneren Rand dichtend an einem Umfang des Hauptkörpers 24 angeordnet. Mit einem äußeren Rand ist die Membran 25 dichtend an den als Gehäuseteile ausgebildeten Bauteilen 23a, 23b angeordnet. Die Membran 25 trägt den Hauptkörper 24 und die an dem Hauptverschlusselement 3 ausgebildete Befüllöffnung 15. Aufgrund der schwingungsfähigen Membran ist das Hauptverschlusselement 3 und insbesondere der Hauptkörper 24 entlang der Längsachse 12 schwingungsfähig, d.h. beweglich mit den Gehäuseteilen 23a, 23b verbunden.

Die Membran 25 ist hierbei zwischen dem Gehäuseteil 23a und dem Gehäuseteil 23b, in welchem der Zulauf 16 und der Ablauf 19 ausgebildet sind, eingespannt. Es ist auch möglich, das Gehäuse des Ventils 1 anders als mit den beiden Gehäuseteilen 23a, 23b auszubilden und/oder die Membran 25 anderweitig an dem Gehäuse des Ventils 1 dichtend zu befestigen.

Die Druckkammer ist folglich - mit Ausnahme der Befüllöffnung - verschließbar.

Wenn in dem Zulauf 16 ein Druck eines fließfähigen Mediums anliegt, wird die Druckkammer 14 durch die Befüllöffnung 15 befüllt.

Unter Zuhilfenahme des fließfähigen Mediums und eines damit in der Druckkammer 14 erzeugten Drucks kann das Hauptverschlusselements 3 einfach verstellt werden und somit der Ablauf 19 fluidal von dem Zulauf 16 getrennt oder damit verbunden werden.

Zu diesem Zweck ist das Steuerelement 5 an dessen distalem Ende 6, bezogen auf die Lage zu dem Handbedienelement 2, mit einem zweiten Verschlusselement 20 verbunden. Das zweite Verschlusselement 20 ist als ein Pilotverschlusselement ausgebildet.

Korrespondierend zu dem Pilotverschlusselement 20 ist in dem Hauptverschlusselement 3 die Ablauföffnung 18 ausgebildet. Die Ablauföffnung 18 ist von einem zweiten Sitz 21 des Ventils 1 umgeben, welcher als ein Pilotventilsitz ausgebildet ist. In dem Bereich des Pilotventilsitzes 21 weist die Ablauföffnung einen Querschnitt auf, der größer ist als ein Querschnitt der Befüllöffnung 15, wie insbesondere in Fig. 3 gezeigt ist. Das Pilotverschlusselement 20 und der Pilotventilsitz 21 bilden gemeinsam ein als ein Pilotventil ausgebildetes Pilot-Absperrorgan aus. Die Ablauföffnung 18 ist somit mit dem Pilotverschlusselement 20 verschließbar, wenn das Pilotverschlusselement 20 an dem Pilotventilsitz 21 anliegt, oder öffenbar, also freigebbar, wenn das Pilotventil 20 nicht an dem Pilotventilsitz 21 anliegt.

Mit dem Pilotverschlusselement 20 ist somit steuerbar, ob sich in der Druckkammer 14 durch die Befüllöffnung 15 ein Druck aufbaut, was bei verschlossener Ablauföffnung 18 der Fall ist, oder ob dieser aufgebaute Druck sich wieder abbaut, indem die Ablauföffnung 18 durch das Pilotverschlusselement 20 freigegeben ist.

Für ein besonders einfaches Schalten des Ventils 1 ist der mit dem Pilotverschlusselement 20 abdeckbare Querschnitt der Ablauföffnung 18 so groß, dass das Pilotverschlusselement 20 mit dem Steuerelement 5 durch einen Innendruck in der Druckkammer 14 in die Richtung einer geschlossen Stellung, in welcher die Ablauföffnung 18 verschlossen ist, getrieben wird.

Dies wird insbesondere dadurch erreicht, dass die mit dem Pilotverschlusselement 20 abdeckbare Querschnittsflache an der Ablauföffnung 18 größer ist als eine Querschnittsflache des Steuerelements 5 an dessen Austritt aus der Druckkammer 14, also im Bereich der Durchtrittsöffnung 26. Über die größere Querschnittsflache an der Ablauföffnung 18 drückt ein fließfähiges Medium in der Druckkammer 14 das Steuerelement 5 im Ergebnis mit einer größeren Kraft in die Richtung der Ablauföffnung 18.

Somit kann das Rückstellelement 10, welches das Steuerelement 5 ebenfalls in die Richtung der Ablauföffnung 18 treibt, mit einer vergleichsweise geringen Federkraft dimensioniert werden. Dies ermöglicht, dass die Handbedienelement-Rückstellfeder 27, welche das Steuerelement 5 über das Betätigungselement 2 und den Stößel 9 entgegen der Richtung der Ablauföffnung 18 treibt, ebenfalls mit vergleichsweiser geringer Federkraft dimensioniert werden kann. Auf diese Weise ist ein leichtgängiges Schaltverhalten erreichbar.

Nachfolgend werden die Zustände des Ventils und das Schalten des Ventils zwischen den Zuständen noch einmal zusammengefasst.

Bei in der Druckkammer 14 aufgebautem Druck wird das Hauptverschlusselement 3 gegen den Hauptventilsitz 4 gedrückt und somit der Zulauf 16 vom Ablauf 19 getrennt. Der Ablauf 19 ist dann von dem Zulauf 16 abgedichtet. Das Ventil 1 befindet sich dann in dem in den Figuren nicht gezeigten geschlossenen Zustand.

Bei entlasteter Druckkammer 14, d.h. bei geöffneter Ablauföffnung 18, führt der Druck im Zulauf 16 dazu, dass das Hauptverschlusselement 3 von dem Zulauf 16 und dem Hauptventilsitz 4 weggedrückt wird und die fluidale Verbindung mit dem Ablauf 19 freigibt. Das Hauptverschlusselement 3 kann dann in der oben genannten geöffneten Stellung befindlich sein, in welcher die Strömung eines fließfähigen Mediums von dem Zulauf 16 zu dem Ablauf 19 nicht oder im Wesentlichen nicht von dem Hauptverschlusselement 3 beeinflusst wird. Die geöffnete Stellung des Hauptverschlusselements 3 ist in den Figuren nicht gezeigt.

Aus den Figuren ist ersichtlich, dass die Ablauföffnung 18 und der Ablauf 19 in einer Verlängerung des Steuerelements 5 längs der Längsachse 12, also längs der Verstellrichtung des Steuerelements 5, hintereinander angeordnet sind.

Das Rückstellelement 10 ist als Schraubenfeder ausgebildet und beaufschlagt das Steuerelement 5 auf Druck. Hierbei stützt sich das Rückstellelement 10 an dem Gehäuseteil 23a ab.

Das Handbedienelement 2 wird von einer Handbedienelement-Rückstellfeder 27 beaufschlagt, die sich ebenfalls an dem Gehäuseteil 23a abstützt. Damit das Handbedienelement 2 das Steuerelement 5 in die geöffnete, die Ablauföffnung 18 öffnende Stellung überfuhren kann, ist die Handbedienelement-Rückstellfeder 27 so ausgebildet, dass sie eine größere Kraft entwickelt als das Rückstellelement 10.

Sowohl das Rückstellelement 10 als auch die Handbedienelement-Rückstellfeder 27 sind als Schraubenfedern ausgebildet, die das Steuerelement 5 umgreifen und in sich aufnehmen.

Die Ausgleichvorrichtung 7 ist entlang der Längsachse 12 oberhalb der Handbedienelement-Rückstellfeder 27 angeordnet.

Das Handbedienelement 2 ist haubenförmig ausgebildet und nimmt in seinem Innenraum 28 die Ausgleichvorrichtung 7 auf, wie in Fig. 2 zu erkennen ist.

Hierbei wird das Handbedienelement 2 in einer ersten Hülse 29 und in einer zweiten Hülse 30 gehalten. Die zweite Hülse 30 ist teilweise in die erste Hülse 29 eingesetzt und in der ersten Hülse 29 um die Längsachse 12 drehbar. Die erste Hülse 29 und die zweite Hülse 30 sind jeweils in der Längsachse 12 festgelegt und sie bilden jeweils einen Anschlag für das Handbedienelement 2 aus.

Das Ventil 1 weist eine bistabile Stellmechanik 31 auf, die eine Push-Push-Verriegelungsmechanik bildet, beispielsweise eine Kugelschreibermechanik oder eine Herzkurvenmechanik. Mit der Stellmechanik 31 das Handbedienelement 2 an der zweiten Hülse 30 zwischen einer oberen Stellung, in welcher das Hauptverschlusselement 3 die geöffnete Stellung einnehmen kann, und einer unteren Stellung, in welcher das Hauptverschlusselement 3 die geschlossene Stellung einnehmen kann, durch Drücken längs der Längsachse 12 verstellbar ist.

Das Ventil 1 weist ferner eine Verstelleinrichtung auf, die in Fig. 2 nicht zu erkennen ist. Mit der Verstelleinrichtung ist ein Maximalabstand, also ein Abstand bei maximal in Richtung der Ablauföffnung 18 ausgefahrenem Steuerelement 5 aus der Aufnahme 8, zwischen dem Pilotverschlusselement 20 und dem Anschlag an der ersten Hülse 29 für das Handbedienelement 2 verstellbar.

Die Verstelleinrichtung ist als eine Kombination aus einem Zahnprofil und einer Mehrzahl von an dem Zahnprofil entlanggleitenden Absätzen ausgebildet. Das Zahnprofil bildet dabei den erwähnten Anschlag in der ersten Hülse 29 für das Handbedienelement 2. Das Zahnprofil ist bei der hier beschriebenen Ausführungsform als Sägezahnprofil am oberen Ende der radial nach innen weisenden Innenseite der ersten Hülse 29 ausgebildet. Die Absätze sind als an dem Zahnprofil entlang bewegbare Stifte an der radial nach außen weisenden Außenseite des Handbedienelements 2 ausgebildet. Das Handbedienelement 2 ist mit der Stellmechanik 31 entlang der Längsachse 12 verschiebbar und zusätzlich mit der Verstelleinrichtung um die Längsachse 12 dreh- oder schwenkbar eingerichtet.

Um von einem (in den Figuren nicht gezeigten) geöffneten Zustand des Ventils 1 in einen (ebenfalls nicht gezeigten) geschlossenen Zustand des Ventils 1 zu schalten, in dem das Hauptverschlusselement 3 dicht an dem Hauptventilsitz 4 anliegt, kann das Handbedienelement 2 aufgrund der Stellmechanik 31 entlang der Längsachse 12 gedrückt und verstellt werden.

Durch das Drücken des Handbedienelements 2 im geöffneten Zustand des Ventils 1 wird das Pilotverschlusselement 20 mittels des Handbedienelements 2 gegen den Pilotventilsitz 21 gedrückt und das Hauptverschlusselement 3 wird gegen den Hauptventilsitz 4 gedrückt. Dadurch wird in der Druckkammer 14 ein Druck aufgebaut, welcher das Pilotverschlusselement 20 auch bei entlastetem Handbedienelement 2 gegen den Pilotventilsitz 21 und das das Hauptverschlusselement 3 gegen den Hauptventilsitz 4 drückt, und so das Ventil 1 in dem geschlossenen Zustand hält.

Um von dem geschlossenen Zustand des Ventils 1 wieder in den geöffneten Zustand des Ventils 1 zu gelangen, kann das Handbedienelement 2 erneut entlang der Längsachse 12 gedrückt werden.

Dabei führt ein Drücken auf das Handbedienelement 2 längs der Längsachse 12 dazu, dass sich zunächst die Aufnahme 8 relativ zum Stößel 9 nach unten bewegt.

Die Beweglichkeit des Stößels 9 in der Aufnahme 8 erlaubt, dass das Handbedienelement 2 über ein durch das Pilotverschlusselement 20 vorgegebenes Ende des Verstellwegs für das Steuerelement 5 hinaus bewegen lässt. Dies ist bei einer Push-Push-Verriegelungsmechanik von Vorteil, da dann über den unteren (in Bezug auf die Push-Bewegung) Totpunkt oder stabilen Punkt hinausgegangen werden kann, um das Handbedienelement 2 von einer unteren Stellung in eine obere Stellung zurückzuholen.

Wenn das Handbedienelement 2 in die obere Stellung verlagert wird, nimmt es den Stößel 9 und das Steuerelement 5 mit. Denn der mit dem Steuerelement 5 verbundene Stößel 9 weist einen größeren Querschnitt auf als eine Durchtrittsöffnung für das Steuerelement 5 in einer unteren Anlagefläche der Aufnahme 8, durch die das Steuerelement 5 in die Aufnahme 8 geführt ist. Der Stößel 9 kann somit an der unteren Anlagefläche der Aufnahme 8 anliegen und bei Verlagerung des Handbedienelements 2 in die obere Stellung nach oben mitgenommen werden.

In dieser Situation gibt das Pilotverschlusselement 20 die Ablauföffnung 18 frei. Da jedoch noch Druck in der Druckkammer 14 aufgebaut ist, verbleibt das Hauptverschlusselement 3 zunächst in seiner geschlossenen Stellung.

Die Ablauföffnung 18 ist jedoch - wie bereits erwähnt - größer dimensioniert als die Befüllöffnung 15, sodass sich der Druck in der Druckkammer 14 über die Ablauföffnung 18 und den Ablauf 19 abbaut.

Dies führt dazu, dass der Druck in dem Zulauf 16 das Hauptverschlusselement 3 mit der Membran 25 anhebt, sodass das der Zulauf 16 und der Ablauf 19 fluidal verbunden werden.

Um das Ventil 1 von dem geöffneten Zustand in den in Fig. 2 und in Fig. 3 gezeigten Zustand zu schalten, kann eine Stellung des Handbedienelements 2 mit der Verstelleinrichtung verändert werden.

In dem in Fig. 2 und Fig. 3 gezeigten Zustand liegt zwischen dem Hauptverschlusselement 3 und dem Hauptventilsitz 4 sowie zwischen dem Pilotverschlusselement 20 und dem Pilotventilsitz 21 ein geringer Abstand vor. Das Hauptverschlusselement 3 ist in einer mit der Verstelleinrichtung eingestellten Zwischenstellung angeordnet, in welcher das Hauptverschlusselement 3 von dem Ablauf 19 gelöst ist, um diese - gedrosselt - freizugeben.

Wenn das Handbedienelement 2 mit den daran ausgebildeten Stiften um die Längsachse 12 gedreht wird, bewegen sich die Stifte an dem Zahnprofil in der ersten Hülse 29 nach unten oder nach oben und nehmen dabei das Handbedienelement 2 mit. Somit kann ein Maximalabstand zwischen dem Hauptventilsitz 4 und dem distalen Ende 6 des Steuerelements 5, also ein Abstand zwischen dem Hauptventilsitz 4 einerseits und dem distalen Ende 6 beziehungsweise dem an diesem befestigten Pilotverschlusselement 20 andererseits einstellbar sein, wenn das Ventil 1 nicht in dem geschlossenen Zustand ist. Ein Öffnungsquerschnitt am Hauptventilsitz 4, durch welchen ein fließfähiges Medium von dem Zulauf 16 in den Ablauf 19 strömen kann, ist somit veränderbar.

Wenn das Pilotverschlusselement 20 im Vergleich zu dem geöffneten Zustand des Ventils 1 näher an die Ablauföffnung 18 herangeführt ist, kann dies zu einem kurzzeitigen Verschluss der Ablauföffnung 18 und damit einem erneuten Druckaufbau in der Druckkammer 14 führen. Da das Handbedienelement 2 weiterhin in seiner oberen Position ist, wird das Hauptverschlusselement 3 durch den Druckaufbau nicht bis zum Hauptventilsitz 4 gedruckt, sondern wird nur so lange nach unten gedrückt, bis die Ablauföffnung 18 wieder geöffnet ist. Denn das Pilotverschlusselement 20 kann wegen der Position des Handbedienelements 2 dem Hauptverschlusselement 3 nicht weiter folgen, bis dieses den Hauptventilsitz 4 erreicht.

In diesem geöffneten Zustand des Pilotventils wird die Druckkammer 14 wieder entlastet, so dass das Hauptverschlusselement 3 wieder bestrebt ist, erneut nach oben zu gelangen. Es stellt sich somit ein schwebender Gleichgewichtszustand ein, in welchem das Hauptverschlusselement 3 in einer Zwischenstellung angeordnet ist und in welcher der Zulauf 16 teilweise geöffnet ist, sodass ein gegenüber der geöffneten Stellung des Hauptverschlusselements 3 verringerter Strom zwischen Zulauf 16 und Ablauf 19 eingestellt ist. Es ist somit erreicht, dass sich ein gegenüber dem geöffneten Zustand des Ventils 1 ein verringerter Maximalabstand zwischen dem Hauptventilsitz 4 und dem distalen Ende 6 des Steuerelements 5 einstellt.

Im Ergebnis ist das Ventil 1 auf die hier beschriebene Weise von dem geöffneten Zustand in den in Fig. 2 gezeigten Zustand überführt worden, in welchem das Hauptverschlusselement 3 in der Zwischenstellung angeordnet ist.

Damit in dem in Fig. 2 gezeigten Zustand mit dem Hauptverschlusselement 3 in der Zwischenstellung eine Geräuschentwicklung begrenzt oder sogar vermieden werden kann, weist das Ventil 1 eine erste Lagereinrichtung 32, welche in einer Zwischenstellung des Hauptverschlusselements 3 von dem Hauptverschlusselement 3 kontaktiert wird, und eine zweite Lagereinrichtung 36, welche in einer Zwischenstellung des Pilotverschlusselements 20 von dem Pilotverschlusselement 20 kontaktiert wird, auf.

Die erste Lagereinrichtung 32 des in den Fig. 1 bis Fig. 6 gezeigten Ausführungsbeispiels des Ventils 1 ist insbesondere gut an dem isoliert in Fig. 4 gezeigten Gehäuseteil 23b, das den Hauptventilsitz 4 aufweist, des gleichen Ausführungsbeispiels zu erkennen.

Die zweite Lagereinrichtung 36 des in den Fig. 1 bis Fig. 6 gezeigten Ausführungsbeispiels des Ventils 1 ist insbesondere gut an dem in Fig. 6 gezeigten Verschlusselement 3, das den Pilotventilsitz 4 aufweist, des gleichen Ausführungsbeispiels zu erkennen.

Für ein besseres Verständnis der Funktionsweise der Lagereinrichtungen 32, 36 des in den Fig. 1 bis Fig. 6 gezeigten Ausführungsbeispiels sind in Fig. 5 und Fig. 6 ein oberer Abschnitt des Gehäuseteils 23b und das in der Zwischenstellung angeordnete Hauptverschlusselement 3 gezeigt. Die Zwischenstellung des Hauptverschlusselement 3 wird von der ersten Lagereinrichtung 32 bestimmt.

Bei dem in Fig. 1 bis Fig. 6 gezeigten Ausführungsbeispiel des Ventils 1 weist das Hauptverschlusselement 3, wie beschrieben, den Hauptkörper 24 und die Membran 25 auf, und das Hauptverschlusselement 3 kontaktiert in der Zwischenstellung mit der Membran 25 die erste Lagereinrichtung 32, indem die Membran 25 auf der ersten Lagereinrichtung 32 aufliegt.

Wie beschrieben, ist die Membran 25 insbesondere im Wesentlichen ringförmig ausgebildet und mit dem inneren Rand dichtend an einem Umfang des Hauptkörpers 24 angeordnet. Zu diesem Zweck ist die Membran 25 insbesondere dichtend in eine an dem Hauptkörper 24 ausgebildete Aussparung eingepresst. Mit dem äußeren Rand ist die Membran 25 dichtend an den Gehäuseteilen 23a, 23b angeordnet. Mit einem radial mittleren Abschnitt 34, der zwischen dem inneren Rand und dem äußeren Rand der Membran 25 ausgebildet ist, liegt die Membran 25 lose an einem parallel zu dem mittleren Abschnitt 34 ausgebildeten, radial äußeren Abschnitt 35 des Hauptkörpers 24 an. Dabei sind der radial mittlere Abschnitt 34 und der radial äußere Abschnitt 35 insbesondere transversal zu der Längsrichtung 12 bzw. zu der Bewegungsrichtung des Hauptverschlusselement 3 ausgerichtet.

Die Membran 25 kann insbesondere aus einem elastischen Werkstoff mit geringem Elastizitätsmodul, beispielsweise aus einem Elastomer, gebildet sein. Der Hauptkörper 24 kann insbesondere aus einem Werkstoff gebildet sein, der einen höheren Elastizitätsmodul aufweist als der Werkstoff, aus dem die Membran 25 gebildet ist, beispielsweise aus einem metallischen Werkstoff. Der gezeigte Hauptkörper 24 ist somit schwieriger elastisch verformbar als die gezeigte Membran 25.

Die erste Lagereinrichtung 32 ist bei dem in Fig. 1 bis Fig. 6 gezeigten Ausführungsbeispiel in Gestalt eines Auflagers mit vier im Wesentlichen stufenförmigen Strukturen 32a, 32b, 32c, 32d ausgebildet. Die stufenförmigen Strukturen 32a, 32b, 32c, 32d sind insbesondere äquidistant auf einer Kreisbahn angeordnet, wobei diese Kreisbahn außerhalb des Hauptventilsitzes 4 angeordnet ist.

Wie insbesondere in Fig. 4 und Fig. 5 ersichtlich ist, sind die im Wesentlichen stufenförmigen Strukturen 32a, 32b, 32c, 32d an einer nach innen weisenden Innenwand des Gehäuseteils 23b einstückig mit dem den Hauptventilsitz 4 aufweisenden Gehäuseteil 23b ausgebildet. Alternativ ist es auch möglich, dass die erste Lagereinrichtung 32 und insbesondere die stufenförmigen Strukturen an dem Gehäuseteil 23b befestigt ist (nicht in den Figuren gezeigt).

Die stufenförmigen Strukturen 32a, 32b, 32c, 32d weisen eine transversal zu der Bewegungsrichtung des Verschlusselements 3, d.h. zu der Längsachse 12, ausgerichtete Fläche auf. An diesen Flächen jeder der stufenförmigen Strukturen sind Pin-förmige Vorsprünge 33a, 33b, 33c, 33d ausgebildet, die von dem Gehäuseteil 23b und insbesondere von den stufenförmigen Strukturen 32a, 32b, 32c, 32d, in die Richtung des Hauptverschlusselements 3 und insbesondere in die Richtung des mittleren Abschnitts 34 der Membran 25 hervorragen. Die Vorsprünge 33a, 33b, 33c, 33d jeweils ebenfalls eine transversal zu der Bewegungsrichtung des Verschlusselements 3 ausgerichtete Fläche auf. Diese Flächen der Pin-förmigen Vorsprünge 33a, 33b, 33c, 33d sind entlang der Längsachse 12 näher an dem distalen Ende 6 des Steuerelements 5 angeordnet als der Hauptventilsitz 4. Im Kontakt mit dem Hauptverschlusselement 3 sind diese Flächen der Pin-förmigen Vorsprünge 33a, 33b, 33c, 33d Kontaktflächen und die Membran 25 liegt auf diesen Kontaktflächen auf.

Das Gehäuseteil 23b und die erste Lagereinrichtung 32 können insbesondere aus einem Werkstoff gebildet sein, der einen höheren Elastizitätsmodul aufweist als der Werkstoff, aus dem die Membran 25 gebildet ist, beispielsweise aus einem metallischen Werkstoff. Die Membran 25, die ein mit der ersten Lagereinrichtung 32 in Kontakt bringbarer Bestandteil des Hauptverschlusselements 3 ist, und die erste Lagereinrichtung 32 sind somit mit unterschiedlicher Elastizität ausgebildet. Die höhere Elastizität der Membran 25 erlaubt es, dass die Membran 25 verformt werden und gegen den Hauptventilsitz 4 gedrückt werden kann, um das Hauptverschlusselement 3 in die geschlossene Stellung zu überführen. Die erste Lagereinrichtung 32 wird dann in die Membran 25 hineingedrückt.

Wenn das Hauptverschlusselement 3 in der Zwischenstellung mit der Membran 25 auf der ersten Lagereinrichtung 32, d.h. auf den Vorsprüngen 33a, 33b, 33c, 33d, aufliegt, bilden die erste Lagereinrichtung 32 und das Hauptverschlusselement 3 vier voneinander beabstandete Kontaktpunkte aus, so dass das Hauptverschlusselement 3 sicher und im Vergleich zu einer (nicht dargestellten) Ausführungsform des Ventils, bei welcher die erste Lagereinrichtung nicht vorgesehen ist, schwingungsreduziert gelagert ist.

Dabei ist zwischen jeweils zwei benachbarten stufenförmigen Strukturen 32a, 32b, 32c, 32d mit daran angeordneten Vorsprüngen 33a, 33b, 33c, 33d ein Freiraum gebildet, der in der Zwischenstellung des Hauptverschlusselements 3, insbesondere in Zusammenwirkung mit dem Hauptventilsitz 4, einen Strömungsquerschnitt für ein fließfähiges Medium ausbildet. Die Summe dieser so gebildeten Strömungsquerschnitte ist größer als der Strömungsquerschnitt, der zwischen dem Hauptverschlusselement 3 und dem Hauptventilsitz 4 parallel zu der Längsachse 12 gebildet ist. Dadurch wird die Durchflussrate durch den Ablauf 19 von dem Strömungsquerschnitt zwischen dem Hauptverschlusselement 3 und dem Hauptventilsitz 4 limitiert.

Aufgrund der beschriebenen Ausbildung ist das Hauptverschlusselement 3 in der Zwischenstellung an der ersten Lagereinrichtung 32 gelagert und die Membran 25 zwischen der ersten Lagereinrichtung 32 und dem Hauptkörper 24 abgestützt angeordnet und insbesondere eingeklemmt. Aufgrund der Elastizität der Membran 25 bleibt das Hauptverschlusselement 3 auch in dem Kontakt mit der ersten Lagereinrichtung 32 entlang der Längsachse 12 beweglich und begrenzt bewegungsfähig und insbesondere schwingungsfähig.

Damit zusätzlich oder alternativ eine von dem Steuerelement 5 bzw. von dem Pilotverschlusselement 20 hervorgerufene Geräuschentwicklung begrenzt oder sogar vermieden werden kann, weist das Ventil 1 die zweite Lagereinrichtung 36 auf, welche von dem Pilotverschlusselement 20 kontaktierbar ist.

Wie insbesondere in Fig. 5 und Fig. 6 zu erkennen ist, ist die zweite Lagereinrichtung 36 bei dem in Fig. 1 bis Fig. 6 gezeigten Ausführungsbeispiel in Gestalt eines Auflagers mit beispielsweise vier im Wesentlichen stufenförmigen Strukturen 36a, 36b, 36c, 36d ausgebildet. Die stufenförmigen Strukturen 36a, 36b, 36c, 36d, sind einstückig mit dem Hauptkörper 24 des Hauptverschlusselements 3 ausgebildet und insbesondere äquidistant auf einer Kreisbahn angeordnet. Diese Kreisbahn weist einen Radius auf, der größer als der Radius des Pilotventilsitzes 21 und kleiner als der Radius des Hauptventilsitzes 4 ist. Mit anderen Worten ausgedrückt, ist die Kreisbahn mit den stufenförmigen Strukturen 36a, 36b, 36c, 36d der zweiten Lagereinrichtung 36 außerhalb des Pilotventilsitzes 21 und innerhalb des Hauptventilsitzes 4 angeordnet.

Die stufenförmigen Strukturen 36a, 36b, 36c, 36d bestehen in dem gezeigten Ausführungsbeispiel jeweils aus einem im Querschnitt viereckigen, flachen Abschnitt. In der Draufsicht sind die stufenförmigen Strukturen 36a, 36b, 36c, 36d teilkreisförmig ausgebildet. Von jeder der stufenförmigen Strukturen 36a, 36b, 36c, 36d ragen in die Richtung des Pilotverschlusselements 20 zwei in der Querschnittsansicht halbrunde Vorsprünge 37a, 37b, 37c, 37d, 37e, 37f, 37g, 37h hervor. Die Vorsprünge 37a, 37b, 37c, 37d, 37e, 37f, 37g, 37h an der zweiten Lagereinrichtung 36 weisen, wie die Vorsprünge an der ersten Lagereinrichtung 32, eine transversal zu der Bewegungsrichtung des Verschlusselements 3, d.h. zu der Längsachse 12, ausgerichtete Fläche auf. Diese Flächen sind entlang der Längsachse 12 näher an dem distalen Ende 6 des Steuerelements 5 angeordnet als der Pilotventilsitz 21. Im Kontakt mit dem Pilotverschlusselement 20 sind diese Flächen der Vorsprünge 37a, 37b, 37c, 37d, 37e, 37f, 37g, 37h Kontaktflächen und das Pilotverschlusselement 20 liegt auf diesen Kontaktflächen auf.

Dabei ist zwischen jeweils zwei benachbarten stufenförmigen Strukturen 36a, 36b, 36c, 36d und zwischen jeweils zwei benachbarten Vorsprüngen 37a, 37b, 37c, 37d, 37e, 37f, 37g, 37h ein Freiraum gebildet, der in der Zwischenstellung des Pilotverschlusselements 20, insbesondere in Zusammenwirkung mit dem Hauptkörper 24, einen Strömungsquerschnitt für ein fließfähiges Medium ausbildet. Die Summe dieser so gebildeten Strömungsquerschnitte ist größer als der Strömungsquerschnitt, der zwischen dem Pilotverschlusselement 20 und dem Pilotventilsitz 21 parallel zu der Längsachse 12 gebildet ist. Dadurch wird die Durchflussrate durch die Ablauföffnung 18 von dem Strömungsquerschnitt zwischen dem Pilotventilsitz 21 und dem Hauptkörper 24 limitiert.

Das Hauptkörper 24 und die zweite Lagereinrichtung 36 können insbesondere aus einem Werkstoff gebildet sein, der einen höheren Elastizitätsmodul aufweist als der Werkstoff, aus dem das Pilotverschlusselement 20 gebildet ist, beispielsweise aus einem metallischen Werkstoff. Das Pilotverschlusselement 20 und die zweite Lagereinrichtung 36 sind somit mit unterschiedlicher Elastizität ausgebildet. Die höhere Elastizität des Pilotverschlusselements 20 erlaubt es, dass das Pilotverschlusselement 20 verformt werden und gegen den Pilotventilsitz 21 gedrückt werden kann, um das Pilotverschlusselement 20 in eine geschlossene Stellung zu überführen. Die zweite Lagereinrichtung 36 wird dann in das Pilotverschlusselement 20 hineingedrückt und das Pilotverschlusselement 20 liegt an dem Pilotventilsitz 21 an. In der geöffneten Stellung des Hauptverschlusselements 3 kann die zweite Lagereinrichtung 36 - je nachdem, ob die Membran 25 eine Bewegung des Hauptverschlusselements 3 bis an das Pilotverschlusselement 3 zulässt oder nicht - an dem Pilotverschlusselement 20 anliegen. In der Zwischenstellung des Hauptverschlusselements 3 wird die zweite Lagereinrichtung 36 zumindest zeitweise von dem Pilotverschlusselement 20 kontaktiert.

Wenn das Pilotverschlusselement 20 auf der zweiten Lagereinrichtung 36 mit den beispielsweise vier stufenförmigen Strukturen 36a, 36b, 36c, 36d und den acht Vorsprüngen 37a, 37b, 37c, 37d, 37e, 37f, 37g, 37h aufliegt, bilden die zweite Lagereinrichtung 36 und das Pilotverschlusselement 20 beispielsweise acht voneinander beabstandete Kontaktpunkte aus, so dass das Hauptverschlusselement 3 sicher und im Vergleich zu einer (nicht dargestellten) Ausführungsform des Ventils, bei welcher die zweite Lagereinrichtung nicht vorgesehen ist, schwingungsreduziert gelagert ist.

Nachfolgend werden weitere Ausführungsformen eines als Ventil ausgebildeten Absperrorgans anhand der Figuren beschrieben. Aufgrund starker Übereinstimmungen der weiteren Ausführungsformen mit dem in den Fig. 1 bis Fig. 6 gezeigten Ausführungsbeispiel werden nur die Unterschiede zu dem in den Fig. 1 bis Fig. 6 gezeigten Ausführungsbeispiel beschrieben.

Diese Unterschiede betreffen insbesondere die Ausbildung des Hauptverschlusselements 3 und die Ausbildung der ersten Lagereinrichtung 32.

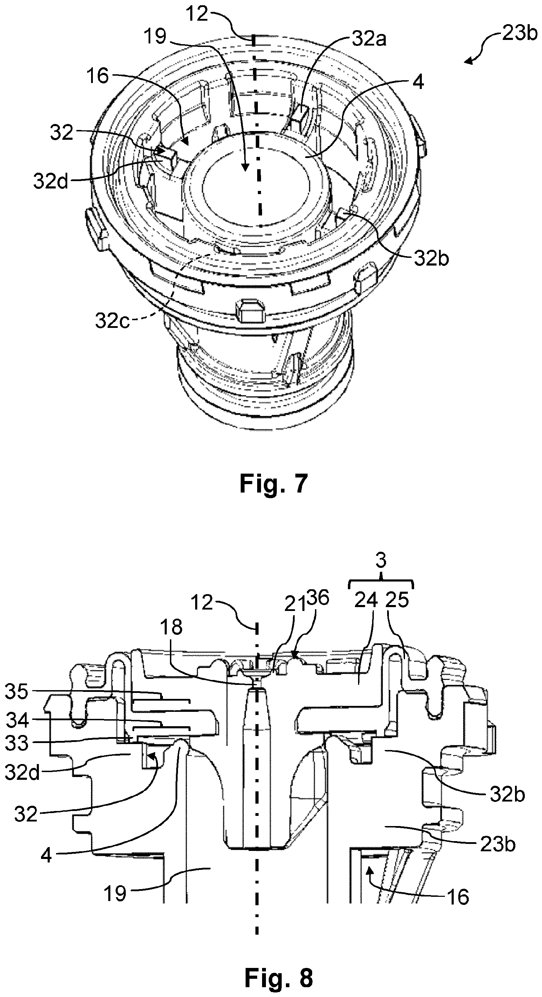

Die Fig. 7 und Fig. 8 zeigen Bestandteile eines Ausführungsbeispiels des Ventils, bei welchem die erste Lagereinrichtung 32 - wie bei dem in Fig. 1 bis Fig. 5 gezeigten Ausführungsbeispiel - in Gestalt eines Auflagers mit vier stufenförmigen Strukturen 32a, 32b, 32c, 32d ausgebildet ist. Die stufenförmigen Strukturen 32a, 32b, 32c, 32d weisen eine transversal zu der Bewegungsrichtung des Verschlusselements 3, d.h. zu der Längsachse 12, ausgerichtete Fläche auf. Diese Flächen sind entlang der Längsachse 12 in einem größeren Abstand zu dem distalen Ende 6 des Steuerelements 5 angeordnet als der Hauptventilsitz 4. Alternativ können diese Flächen auch den gleichen Abstand aufweisen wie der Hauptventilsitz 4.

Im Kontakt mit dem Hauptverschlusselement 3 sind die transversal zu der Bewegungsrichtung des Verschlusselements 3 ausgerichteten Flächen der stufenförmigen Strukturen 32a, 32b, 32c, 32d Kontaktflächen und die Membran 25 liegt auf diesen Kontaktflächen auf.

Anders als bei dem in den Fig. 1 bis Fig. 5 beschriebenen Ausführungsbeispiel weisen die stufenförmigen Strukturen 32a, 32b, 32c, 32d hier keine Vorsprünge auf. Allerdings weist die Membran 25 einen insbesondere ringförmig ausgebildeten Vorsprung 33 auf, der von dem Hauptverschlusselement 3 in die Richtung der zweiten Lagereinrichtung 32 hervorragt. Der Vorsprung 33 könnte auch anders als ringförmig ausgestaltet sein, beispielsweise Pin- und/oder zinnenförmig. Aufgrund des an der Membran 25 ausgebildeten Vorsprungs 33 können das Hauptverschlusselement 3 und die erste Lagereinrichtung 32 in der in Fig. 8 gezeigten Zwischenstellung des Hauptverschlusselements 3 in Kontakt sein, wenn das Hauptverschlusselement 3 und der Hauptventilsitz 4 beabstandet sind.

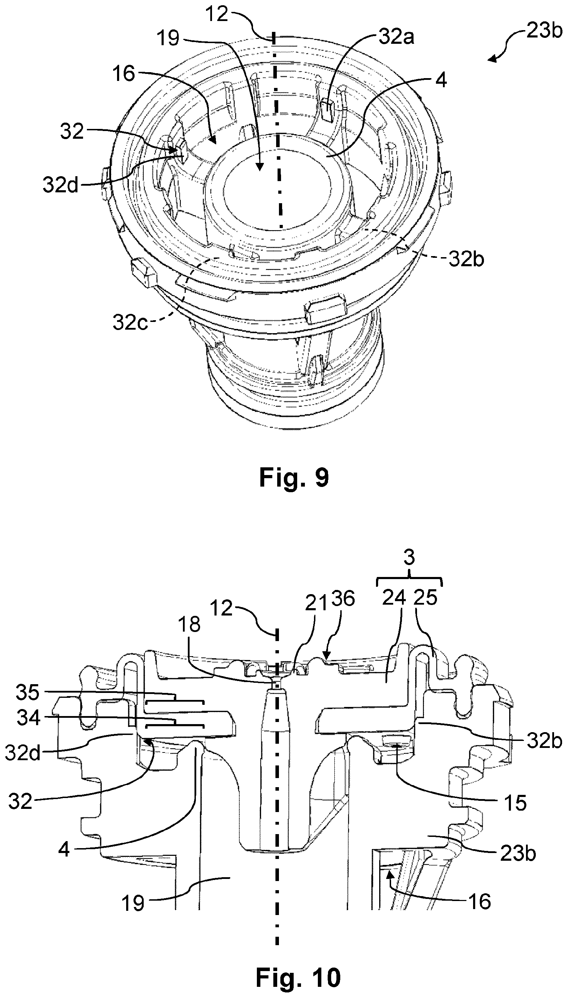

Die Fig. 9 und Fig. 10 zeigen Bestandteile eines weiteren Ausführungsbeispiels des Ventils. Auch bei diesem Ausführungsbeispiel ist erste Lagereinrichtung 32 in Gestalt von vier stufenförmigen Strukturen 32a, 32b, 32c, 32d ausgebildet. Die stufenförmigen Strukturen 32a, 32b, 32c, 32d und das Hauptverschlusselement 3 sind derart ausgebildet und angeordnet, dass das Hauptverschlusselement 3 in der in Fig. 10 gezeigten Zwischenstellung des Hauptverschlusselements 3 an einer radial nach innen weisenden Fläche der stufenförmigen Strukturen 32a, 32b, 32c, 32d anliegt.

Die erste Lagereinrichtung 32 weist somit eine parallel zu einer Bewegungsrichtung des Hauptverschlusselements 3 ausgerichtete Kontaktfläche auf. Die Flächen an den stufenförmigen Strukturen 32a, 32b, 32c, 32d weisen entlang der Längsachse 12 zumindest einem Abschnitt auf, der einen geringeren Abstand zu dem distalen Ende 6 des Steuerelements 5 besitzt als der Hauptventilsitz 4. Bei dieser Ausführungsform kann somit auf Vorsprünge an der ersten Lagereinrichtung 32 oder dem Hauptverschlusselement 3 verzichtet werden.

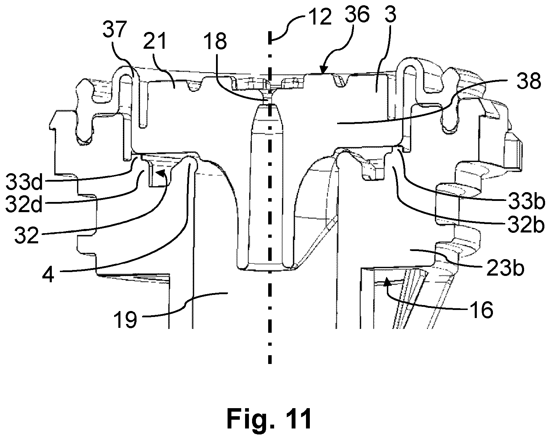

Die Fig. 11 zeigt Bestandteile eines noch weiteren Ausführungsbeispiels des Ventils. Das Gehäuseteil 23b und insbesondere die erste Lagereinrichtung 32 sind im Wesentlichen identisch zu den entsprechenden Bestandteilen der in den Fig. 1 bis Fig. 5 gezeigten Ausführungsform des Ventils.

Das Hauptverschlusselement 3 ist unterschiedlich zu dem in den Fig. 1 bis Fig. 5 gezeigten Hauptverschlusselement ausgebildet. Insbesondere ist das in Fig. 11 gezeigte Hauptverschlusselement 3 einteilig ausgebildet. Das gezeigte Hauptverschlusselement 3 weist dabei einen dünnwandigen Abschnitt 38 auf, so dass das Hauptverschlusselement 3 mit diesem Abschnitt 38 abschnittsweise als eine schwingungsfähige Membran ausgebildet ist. Der dünnwandige Abschnitt 38 weist im Wesentlichen die Geometrie der in den Fig. 1 bis Fig. 5 gezeigten Membran auf. Ein dickwandiger Abschnitt 39, an welchem der dünnwandige Abschnitt 38 angrenzt, weist im Wesentlichen die Geometrie des in den Fig. 1 bis Fig. 5 gezeigten Hauptkörpers dar und erfüllt dessen Funktion.

Das in Fig. 11 gezeigte Hauptverschlusselement 3 kann beispielsweise aus einem elastischen Werkstoff mit geringem Elastizitätsmodul, beispielsweise aus einem Elastomer, gebildet sein.

Das Gehäuseteil 23b und die erste Lagereinrichtung 32 können insbesondere aus einem Werkstoff gebildet sein, der einen höheren Elastizitätsmodul aufweist als der Werkstoff, aus dem das Hauptverschlusselement 3 gebildet ist, beispielsweise aus einem metallischen Werkstoff. Das Hauptverschlusselement 3 und die erste Lagereinrichtung 32 sind somit mit unterschiedlicher Elastizität ausgebildet. Die höhere Elastizität des Hauptverschlusselements 3 erlaubt es, dass es verformt werden und gegen den Hauptventilsitz 4 gedrückt werden kann, um das Hauptverschlusselement 3 in die geschlossene Stellung zu überführen. Die erste Lagereinrichtung 32 wird dann in das Hauptverschlusselement 3 hineingedrückt.

### Bezugszeichenliste

- 1: Absperrorgan/Ventil
- 2: Handbedienelement
- 3: Verschlusselement/Hauptverschlusselement
- 4: Sitz/Hauptventilsitz
- 5: Steuerelement
- 6: distales Ende
- 7: Ausgleichvorrichtung
- 8: Aufnahme
- 9: Stößel
- 10: Rückstellelement
- 11: proximales Ende
- 12: Längsachse
- 14: Druckkammer
- 15: Befüllöffnung
- 16: Zulauf
- 17: Reinigungsstift/Ende der Unterstützungsfeder
- 18: Ablauföffnung
- 19: Ablauf
- 20: zweites Verschlusselement, Pilotverschlusselement
- 21: zweiter Ventilsitz, Pilotventilsitz
- 22: Dichtung
- 23a: Gehäuseteil
- 23b: Gehäuseteil
- 24: Hauptkörper
- 25: Membran
- 26: Durchtrittsöffnung
- 27: Handbedienelement-Ruckstellfeder
- 28: Innenraum des Handbedienelements
- 29: erste Hülse
- 30: zweite Hülse
- 31: Stellmechanik
- 32: erste Lagereinrichtung
- 32a, 32b, 32c, 32d: stufenförmige Strukturen
- 33, 33a, 33b, 33c, 33d: Vorsprung
- 34: radial mittlerer Abschnitt der Membran
- 35: radial äußerer Abschnitt des Hauptkörpers
- 36: zweite Lagereinrichtung
- 36a, 36b, 36c, 36d: stufenförmige Strukturen
- 37a, 37b, 37c, 37d, 37e, 37f, 37g, 37h: Vorsprung
- 38: dünnwandiger Abschnitt
- 39: dickwandiger Abschnitt

## Patentansprüche

1. Absperrorgan (1), insbesondere Ventil, für ein fließfähiges Medium mit mindestens einem in eine geöffnete Stellung und in eine geschlossene Stellung bringbaren Verschlusselement (3, 20), und einem Sitz (4, 21) für das mindestens eine Verschlusselement (3, 20), insbesondere einem Ventilsitz, **dadurch gekennzeichnet, dass**
eine Zwischenstellung des Verschlusselements (3, 20) durch eine Lagereinrichtung (32, 36) bestimmt ist, insbesondere wobei in der Zwischenstellung das Verschlusselement (3, 20) die Lagereinrichtung (32, 36) kontaktiert und/oder von dem Sitz (4, 21) beabstandet ist.

2. Absperrorgan (1) nach einem der vorgehenden Ansprüche,
**dadurch gekennzeichnet, dass** das Absperrorgan (1) eine Stellmechanik (31) und/oder eine Verstelleinrichtung aufweist, mit welcher/welchen das Verschlusselement (3, 20) oder ein Bestandteil des Verschlusselements (3, 20) in einen einstellbaren Abstand zu dem Sitz (4, 21) bringbar ist/sind.

3. Absperrorgan (1) nach einem der vorgehenden Ansprüche,
**dadurch gekennzeichnet, dass** zumindest ein mit der Lagereinrichtung (32, 36) in Kontakt bringbarer Bestandteil des Verschlusselements (3, 20) und die Lagereinrichtung (32, 36) mit unterschiedlicher Elastizität und/oder Steifigkeit ausgebildet sind.

4. Absperrorgan (1) nach einem der vorgehenden Ansprüche,
**dadurch gekennzeichnet, dass** die Lagereinrichtung (32, 36) und das Verschlusselement (3, 20) im Kontakt miteinander mindestens zwei voneinander beabstandete Kontaktpunkte ausbilden.

5. Absperrorgan (1) nach einem der vorgehenden Ansprüche, **dadurch gekennzeichnet, dass** das Verschlusselement (3, 20) zumindest abschnittsweise als eine Membran (25) ausgebildet ist oder eine Membran (25) aufweist, insbesondere wobei die Membran (25) in der Zwischenstellung die Lagereinrichtung (32, 36) kontaktiert.

6. Absperrorgan (1) nach einem der vorgehenden Ansprüche, **dadurch gekennzeichnet, dass** eine oder die Membran (25) des Verschlusselements (3, 20) in der Zwischenstellung zwischen der Lagereinrichtung (32, 36) und einem Hauptkörper (24) des Verschlusselements (3, 20) abgestützt angeordnet ist.

7. Absperrorgan (1) nach einem der vorgehenden Ansprüche, **dadurch gekennzeichnet, dass** die Lagereinrichtung (32, 36) einstückig mit einem dem Sitz (4, 21) aufweisenden Bauteil (23b, 3) ausgebildet ist oder an einem den Sitz (4, 21) aufweisenden Bauteil (23b, 3) befestigt ist.

8. Absperrorgan (1) nach einem der vorgehenden Ansprüche, **dadurch gekennzeichnet, dass** die Lagereinrichtung (32, 36) als ein Auflager mit mindestens einer transversal oder parallel zu einer Bewegungsrichtung des Verschlusselements (3, 20) ausgerichteten Kontaktfläche ausgebildet ist.

9. Absperrorgan (1) nach einem der vorgehenden Ansprüche, **dadurch gekennzeichnet, dass** in der Zwischenstellung des Verschlusselements (3,20) ein erster Strömungsquerschnitt von der Lagereinrichtung (32, 36) mitbestimmt ist und ein zweiter Strömungsquerschnitt von dem Verschlusselement (3, 20) und dem Sitz (4, 21) bestimmt ist, wobei der erste Strömungsquerschnitt größer ist als der zweite Strömungsquerschnitt.

10. Absperrorgan (1) nach einem der vorgehenden Ansprüche, **dadurch gekennzeichnet, dass** die Lagereinrichtung (32, 36) einen Vorsprung oder eine Mehrzahl von Vorsprüngen (33a, 33b, 33c, 33d, 37a, 37b, 37c, 37d, 37e, 37f, 37g, 37h) aufweist, insbesondere wobei der Vorsprung oder die Mehrzahl von Vorsprüngen (33a, 33b, 33c, 33d, 37a, 37b, 37c, 37d, 37e, 37f, 37g, 37h) von einem oder dem den Sitz (4, 21) aufweisenden Bauteil (23b, 3) in die Richtung des Verschlusselements (3, 20) hervorragt.

11. Absperrorgan (1) nach einem der vorgehenden Ansprüche, **dadurch gekennzeichnet, dass** das Verschlusselement (3, 20) und insbesondere eine oder die Membran (25) des Verschlusselements (3, 20) einen oder den Vorsprung (33) oder eine oder die Mehrzahl von Vorsprüngen aufweist, insbesondere wobei der Vorsprung (33) oder die Mehrzahl von Vorsprüngen von dem Verschlusselement (3, 20) in die Richtung der Lagereinrichtung (32, 36) hervorragt.

12. Absperrorgan (1) nach einem der vorgehenden Ansprüche, **dadurch gekennzeichnet, dass** das Verschlusselement (3, 20) lösbar mit einem Steuerelement (5) gekoppelt ist, insbesondere wobei die Stellungen des Verschlusselements (3, 20) mit dem Steuerelement vorgebbar sind.

13. Absperrorgan (1) nach einem der vorgehenden Ansprüche, **dadurch gekennzeichnet, dass** das Absperrorgan (1) eine Ausgleichvorrichtung (7) aufweist.

14. Absperrorgan (1) nach einem der vorgehenden Ansprüche, **dadurch gekennzeichnet, dass** das Absperrorgan (1) ein Haupt-Absperrorgan und ein Pilot-Absperrorgan aufweist, wobei das Haupt-Absperrorgan als ein Absperrorgan nach einem der vorgehenden Ansprüchen ausgebildet ist und/oder wobei das Pilot-Absperrorgan als ein Absperrorgan nach einem der vorgehenden Ansprüchen ausgebildet ist, insbesondere wobei das Haupt-Absperrorgan als ein Hauptventil ausgebildet ist und/oder wobei das Pilot-Absperrorgan als ein Pilotventil ausgebildet ist.

15. Absperrorgan (1) nach einem der vorgehenden Ansprüche, **dadurch gekennzeichnet, dass** das Absperrorgan (1) ein erstes Verschlusselement (3), einen ersten Sitz (4) für das erste Verschlusselement (3), ein zweites Verschlusselement (20), einen zweiten Sitz (21) für das zweite Verschlusselement (20) und mindestens eine Lagereinrichtung (32, 36) aufweist, insbesondere wobei das erste Verschlusselement (3) und der erste Sitz (4) ein oder das bevorzugt als Hauptventil ausgebildete Haupt-Absperrorgan ausbilden und/oder wobei das zweite Verschlusselement (20) und der zweite Sitz (21) ein oder das bevorzugt als Pilotventil ausgebildete Pilot-Absperrorgan ausbilden.

16. Absperrorgan (1) nach einem der vorgehenden Ansprüche, **dadurch gekennzeichnet, dass** das Verschlusselement (3, 20) bestimmungsgemäß entlang einer Längsachse (12) beweglich ist und/oder dass das Absperrorgan (1) als ein insbesondere linear verstellbares Drosselventil ausgebildet ist.

17. Absperrorgan (1) nach einem der vorgehenden Ansprüche, **dadurch gekennzeichnet, dass** eine oder die Stellmechanik (31) und/oder eine oder die Verstelleinrichtung eine Push-Push-Verriegelungsmechanik aufweist/aufweisen.

## Geänderte Patentansprüche

### Geänderte Patentansprüche gemäss Regel 137(2) EPÜ.

1. Absperrorgan (1), insbesondere Ventil, für ein fließfähiges Medium mit mindestens einem in eine geöffnete Stellung und in eine geschlossene Stellung bringbaren Verschlusselement (3, 20), und einem Sitz (4, 21) für das mindestens eine Verschlusselement (3, 20), insbesondere einem Ventilsitz, **dadurch gekennzeichnet, dass**
eine Zwischenstellung des Verschlusselements (3, 20) durch eine Lagereinrichtung (32, 36) bestimmt ist, insbesondere wobei in der Zwischenstellung das Verschlusselement (3, 20) die Lagereinrichtung (32, 36) kontaktiert und/oder von dem Sitz (4, 21) beabstandet ist.

2. Absperrorgan (1) nach einem der vorgehenden Ansprüche, **dadurch gekennzeichnet, dass** das Absperrorgan (1) eine Stellmechanik (31) und/oder eine Verstelleinrichtung aufweist, mit welcher/welchen das Verschlusselement (3, 20) oder ein Bestandteil des Verschlusselements (3, 20) in einen einstellbaren Abstand zu dem Sitz (4, 21) bringbar ist/sind.

3. Absperrorgan (1) nach einem der vorgehenden Ansprüche, **dadurch gekennzeichnet, dass** zumindest ein mit der Lagereinrichtung (32, 36) in Kontakt bringbarer Bestandteil des Verschlusselements (3, 20) und die Lagereinrichtung (32, 36) mit unterschiedlicher Elastizität und/oder Steifigkeit ausgebildet sind.

4. Absperrorgan (1) nach einem der vorgehenden Ansprüche, **dadurch gekennzeichnet, dass** die Lagereinrichtung (32, 36) und das Verschlusselement (3, 20) im Kontakt miteinander mindestens zwei voneinander beabstandete Kontaktpunkte ausbilden.

5. Absperrorgan (1) nach einem der vorgehenden Ansprüche, **dadurch gekennzeichnet, dass** das Verschlusselement (3, 20) zumindest abschnittsweise als eine Membran (25) ausgebildet ist oder eine Membran (25) aufweist, insbesondere wobei die Membran (25) in der Zwischenstellung die Lagereinrichtung (32, 36) kontaktiert.

6. Absperrorgan (1) nach Anspruch 5, **dadurch gekennzeichnet, dass** die Membran (25) des Verschlusselements (3, 20) in der Zwischenstellung zwischen der Lagereinrichtung (32, 36) und einem Hauptkörper (24) des Verschlusselements (3, 20) abgestützt angeordnet ist.

7. Absperrorgan (1) nach einem der vorgehenden Ansprüche, **dadurch gekennzeichnet, dass** die Lagereinrichtung (32, 36) einstückig mit einem dem Sitz (4, 21) aufweisenden Bauteil (23b, 3) ausgebildet ist oder an einem den Sitz (4, 21) aufweisenden Bauteil (23b, 3) befestigt ist.

8. Absperrorgan (1) nach einem der vorgehenden Ansprüche, **dadurch gekennzeichnet, dass** die Lagereinrichtung (32, 36) als ein Auflager mit mindestens einer transversal oder parallel zu einer Bewegungsrichtung des Verschlusselements (3, 20) ausgerichteten Kontaktfläche ausgebildet ist.

9. Absperrorgan (1) nach einem der vorgehenden Ansprüche, **dadurch gekennzeichnet, dass** in der Zwischenstellung des Verschlusselements (3,20) ein erster Strömungsquerschnitt von der Lagereinrichtung (32, 36) mitbestimmt ist und ein zweiter Strömungsquerschnitt von dem Verschlusselement (3, 20) und dem Sitz (4, 21) bestimmt ist, wobei der erste Strömungsquerschnitt größer ist als der zweite Strömungsquerschnitt.

10. Absperrorgan (1) nach einem der vorgehenden Ansprüche, **dadurch gekennzeichnet, dass** die Lagereinrichtung (32, 36) einen Vorsprung oder eine Mehrzahl von Vorsprüngen (33a, 33b, 33c, 33d, 37a, 37b, 37c, 37d, 37e, 37f, 37g, 37h) aufweist, insbesondere wobei der Vorsprung oder die Mehrzahl von Vorsprüngen (33a, 33b, 33c, 33d, 37a, 37b, 37c, 37d, 37e, 37f, 37g, 37h) von einem oder dem den Sitz (4, 21) aufweisenden Bauteil (23b, 3) in die Richtung des Verschlusselements (3, 20) hervorragt.

11. Absperrorgan (1) nach einem der Ansprüche 1 bis 9, **dadurch gekennzeichnet, dass** das Verschlusselement (3, 20) und insbesondere eine oder die Membran (25) des Verschlusselements (3, 20) einen Vorsprung (33) oder eine oder die Mehrzahl von Vorsprüngen aufweist, insbesondere wobei der Vorsprung (33) oder die Mehrzahl von Vorsprüngen von dem Verschlusselement (3, 20) in die Richtung der Lagereinrichtung (32, 36) hervorragt.

12. Absperrorgan (1) nach einem der vorgehenden Ansprüche, **dadurch gekennzeichnet, dass** das Verschlusselement (3, 20) lösbar mit einem Steuerelement (5) gekoppelt ist, insbesondere wobei die Stellungen des Verschlusselements (3, 20) mit dem Steuerelement vorgebbar sind.

13. Absperrorgan (1) nach einem der vorgehenden Ansprüche, **dadurch gekennzeichnet, dass** das Absperrorgan (1) eine Ausgleichvorrichtung (7) aufweist.

14. Absperrorgan (1) nach einem der vorgehenden Ansprüche, **dadurch gekennzeichnet, dass** das Absperrorgan (1) ein Haupt-Absperrorgan und ein Pilot-Absperrorgan aufweist, wobei das Haupt-Absperrorgan als ein Absperrorgan nach einem der vorgehenden Ansprüchen ausgebildet ist und/oder wobei das Pilot-Absperrorgan als ein Absperrorgan nach einem der vorgehenden Ansprüchen ausgebildet ist, insbesondere wobei das Haupt-Absperrorgan als ein Hauptventil ausgebildet ist und/oder wobei das Pilot-Absperrorgan als ein Pilotventil ausgebildet ist.

15. Absperrorgan (1) nach einem der vorgehenden Ansprüche, **dadurch gekennzeichnet, dass** das Absperrorgan (1) ein erstes Verschlusselement (3), einen ersten Sitz (4) für das erste Verschlusselement (3), ein zweites Verschlusselement (20), einen zweiten Sitz (21) für das zweite Verschlusselement (20) und mindestens eine Lagereinrichtung (32, 36) aufweist, insbesondere wobei das erste Verschlusselement (3) und der erste Sitz (4) ein oder das bevorzugt als Hauptventil ausgebildete Haupt-Absperrorgan ausbilden und/oder wobei das zweite Verschlusselement (20) und der zweite Sitz (21) ein oder das bevorzugt als Pilotventil ausgebildete Pilot-Absperrorgan ausbilden.

16. Absperrorgan (1) nach einem der vorgehenden Ansprüche, **dadurch gekennzeichnet, dass** das Verschlusselement (3, 20) bestimmungsgemäß entlang einer Längsachse (12) beweglich ist und/oder dass das Absperrorgan (1) als ein insbesondere linear verstellbares Drosselventil ausgebildet ist.

17. Absperrorgan (1) nach einem der Ansprüche 2 bis 16, **dadurch gekennzeichnet, dass** die Stellmechanik (31) und/oder die Verstelleinrichtung eine Push-Push-Verriegelungsmechanik aufweist/aufweisen.
